# EUROPÄISCHE PATENTSCHRIFT

(11) **EP 1 448 054 B1**
(45) Veröffentlichungstag und Bekanntmachung des Hinweises auf die Patenterteilung: **25.03.2009**
(21) Anmeldenummer: 02803405.6
(22) Anmeldetag: 21.11.2002
(51) Int. Cl.: A01N 25/10, A01N 25/30, A01N 43/88

(54) **VERWENDUNG BESTIMMTER COPOLYMERE ALS ADJUVANS UND MITTEL FUR DEN AGROTECHNISCHEN BEREICH**
USE OF DEFINED COPOLYMERS AS ADJUVANTS AND AGENTS IN THE AGROTECHNICAL DOMAIN
UTILISATION DE COPOLYMERES SPECIFIQUES EN TANT QU'ADJUVANTS, ET AGENTS POUR LE DOMAINE AGROTECHNIQUE

(30) Priorität: 21.11.2001 DE 10156997
(43) Veröffentlichungstag der Anmeldung: 25.08.2004
(73) Patentinhaber: BASF SE, 67056 Ludwigshafen (DE)
(72) Erfinder: DIEING, Reinhold, 67346 Speyer (DE); BERGHAUS, Rainer, 67346 Speyer (DE); CHRISSTOFFELS, Lysander, 67117 Limburgerhof (DE); SCHMIDT, Oskar, 67105 Schifferstadt (DE); KÖHLE, Harald, 67273 Bobenheim (DE); GOTSCHE, Michael, 68259 Mannheim (DE); KOBER, Reiner, 67136 Fu gönheim (DE)
(74) Vertreter: Reitstötter - Kinzebach
(86) Internationale Anmeldenummer: PCT/EP2002/013090
(87) Internationale Veröffentlichungsnummer: WO 2003/043420

(56) Entgegenhaltungen:
- EP-A- 0 356 812
- WO-A-00/42847
- WO-A-96/10913
- WO-A-99/18785
- FR-A- 2 545 325
- US-A- 2 652 323
- US-A- 3 393 990
- US-A- 4 102 667

## Beschreibung

Die vorliegende Erfindung betrifft die Verwendung bestimmter Copolymere vom amphiphilen Typ als wirkungsverbesserndes Adjuvans im agrotechnischen Bereich und insbesondere im Bereich des Pflanzenschutzes. Entsprechende agrotechnische Mittel werden ebenfalls beschrieben.

Neben der Optimierung der Wirkstoffeigenschaften kommt mit Blick auf eine industrielle Produktion und Anwendung von Wirkstoffen der Entwicklung eines effizienten Mittels besondere Bedeutung zu. Durch eine sachgerechte Formulierung des oder der Wirkstoffe muß ein optimaler Ausgleich zwischen teils gegenläufigen Eigenschaften wie der biologischen Wirksamkeit, der Toxikologie, möglichen Einflüssen auf die Umwelt und den Kosten gefunden werden. Darüber hinaus bestimmt die Formulierung zu einem erheblichen Maß die Haltbarkeit und den Anwendungskomfort eines Mittels.

Von besonderer Bedeutung für die Wirksamkeit eines agrotechnischen Mittels ist die effektive Aufnahme des Wirkstoffs durch die Pflanze. Erfolgt diese Aufnahme über das Blatt, so stellt sich diese als komplexer Transportvorgang dar, bei dem die Wirkstoffmasse, beispielsweise ein Herbizid, zunächst in die wachsartige Cuticula des Blatts eindringen und anschließend über die Cuticula in die unterliegenden Gewebe an den eigentlichen Wirkort diffundieren muss.

Allgemein bekannt und landwirtschaftliche Praxis ist es, zwecks verbesserter Wirksamkeit Formulierungen bestimmte Hilfsstoffe zuzusetzen. Vorteilhafterweise können dadurch die Wirkstoffmengen in der Formulierung bei gleichbleibender Aktivität verringert werden, wodurch Kosten minimiert und gegebenenfalls bestehende gesetzliche Regelungen eingehalten werden können. Auch gelingt es in Einzelfällen, das Wirkstoffspektrum zu vergrößern, indem Pflanzen, die ohne Zusatz nur in unzureichender Weise mit einem bestimmten Wirkstoff behandelt werden konnten, durch Zusatz bestimmter Hilfsstoffe einer entsprechenden Behandlung zugänglich sind. Weiterhin kann die Leistungsfähigkeit unter ungünstigen Umweltbedingungen in Einzelfällen durch eine geeignete Formulierung erhöht werden. Mithin können auch Unverträglichkeiten verschiedener Wirkstoffe in einer Formulierung vermieden werden.

Derartige Hilfsstoffe werden in der Regel als Adjuvantien bezeichnet. Es handelt sich oftmals um oberflächenaktive oder salzartige Verbindungen. Diese können grob je nach Wirkungsweise in Modifikatoren, Aktuatoren, Dünger und pH-Puffer unterteilt werden. Modifikatoren beeinflussen Benetzung, Haftung und Spreitung einer Formulierung. Aktuatoren brechen die wachsartige Pflanzencuticula auf und verbessern die Penetration des Wirkstoffs in die Cuticula sowohl kurzfristig (im Minutenbereich) als auch langfristig (im Stundenbereich). Dünger wie Ammoniumsulfat, Ammoniumnitrat oder Harnstoff verbessern die Absorption und Löslichkeit des Wirkstoffs, und sie können antagonistische Verhaltensweisen von Wirkstoffen verringern. pH-Puffer werden herkömmlicherweise zur optimalen Einstellung des pH-Werts der Formulierung verwendet.

Im Hinblick auf die Aufnahme des Wirkstoffs in das Blatt können oberflächenaktive Substanzen als Modifikatoren und Aktuatoren wirken. Allgemein wird angenommen, dass oberflächenaktive Substanzen die effektive Kontaktfläche von Flüssigkeiten auf Blättern durch eine Verminderung der Oberflächenspannung erhöhen können. Darüber hinaus können oberflächenaktive Substanzen die epicuticulären Wachse auflösen oder aufbrechen, was die Absorption des Wirkstoffs erleichtern kann. Ferner können oberflächenaktive Substanzen auch die Löslichkeit von Wirkstoffen in Formulierungen verbessern und damit eine Kristallbildung vermeiden oder diese zumindest hinauszögern. Schließlich können sie auch die Absorption von Wirkstoffen beeinflussen, indem sie Feuchtigkeit zurückhalten.

Adjuvantien vom oberflächenaktiven Typ werden in vielfältiger Weise für agrotechnische Anwendungen genutzt. Man kann diese in anionische, kationische, nicht-ionische oder amphotere Stoffgruppen unterteilen, je nach Molekulargewicht und lipophilen Gruppen (vgl. auch das allgemein bekannte HLB-System).

Traditionell werden Öle auf Petroleum-Basis als aktivierende Adjuvantien verwendet. In jüngster Vergangenheit setzte man auch Samenextrakte, natürliche Öle und deren Derivate, beispielsweise aus Sojabohnen, Sonnenblumen und Kokosnuss, ein.

Bei synthetischen oberflächenaktiven Substanzen, die üblicherweise als Aktuatoren verwendet werden, handelt es sich meistens um Polyoxyethylen-Kondensate mit Alkoholen, Alkylphenolen oder Alkylaminen, welche HLB-Werte im Bereich von 8 bis 13 aufweisen. Darüber hinaus werden Silikon-modifizierte Polyethylenoxid-Adjuvantien mit besonders ausgeprägten oberflächenaktiven Eigenschaften wegen ihrer ausgezeichneten Spreitfähigkeit eingesetzt. In diesem Sinne lehrt die WO 00/42847 beispielsweise den Einsatz bestimmter Alkoholalkoxylate, um die Wirksamkeit agrotechnischer Biozidformulierungen zu steigern.

Copolymere vom amphiphilen Typ werden häufig als Detergens in Wasch- und Reinigungsmitteln eingesetzt. Beispielsweise beschreibt die US-A-5,008,032 (auch EP 0 367 049 A1) bestimmte oberflächenaktive Copolymere, die durch Copolymerisation von Olefinen und Dicarbonsäureanhydriden erhalten werden. Eine weitere in der EP 0 785 717 B1 angegebene Anwendung derartiger Copolymere betrifft die Verringerung der Sedimentation von Metazachlor in wäßrigen Mitteln. Die Veredlung von Leder und Pelzen wird in der EP 0 412 389 A1 und der WO 91/02094 als Verwendungsmöglichkeit dieser Copolymere angegeben. In der WO 94/15706 wird die Anwendung als Dispergiermittel zur Herstellung wäßriger Pigmentsuspensionen beschrieben.

Der vorliegenden Erfindung liegt die Aufgabe zugrunde, weitere Anwendungen derartiger Copolymere zur Verfügung zu stellen.

Diese Aufgabe löst die vorliegende Erfindung durch die Verwendung der Copolymere als Adjuvans und die Bereitstellung agrotechnischer Mittel, die bestimmte dieser Copolymere enthalten.

Gegenstand der vorliegenden Erfindung ist daher die Verwendung eines Copolymers (CP) oder eines Salzes des Copolymers (CP), welches Monomereinheiten
(i) wenigstens eines Olefins und/oder wenigstens eines Vinylethers,
(ii) wenigstens einer ethylenisch ungesättigten Dicarbonsäure und/oder wenigstens eines ethylenisch ungesättigten Dicarbonsäurederivats, und
(iii) gegebenenfalls wenigstens eines weiteren copolymerisierbaren Comonomers
enthält,
als Adjuvans bei der Behandlung von Pflanzen.

Die Copolymere CP weisen adjuvante, insbesondere wirkungsfördernde Eigenschaften auf. So ermöglicht der Zusatz derartiger Copolymere eine beschleunigte Aufnahme von Wirkstoffen durch eine mit dem Wirkstoff zu behandelnde Pflanze. Aus der adjuvanten Wirkung leiten sich insbesondere folgende Aspekte bei der Behandlung von Pflanzen mit einem oder mehreren Wirkstoffen ab:
- vergleichsweise höhere Wirksamkeit des Wirkstoffs bei gegebener Aufwandmenge;
- vergleichsweise geringere Aufwandmenge bei gegebener Wirkung;
- vergleichsweise stärkere Aufnahme des Wirkstoffs durch die Pflanze, insbesondere über das Blatt, und damit Vorteile im Nachauflaufverfahren, insbesondere bei der Sprühbehandlung von Pflanzen.

Die erfindungsgemäße Verwendung ist insbesondere auf den Pflanzenanbau, die Landwirtschaft und den Gartenbau gerichtet. Insbesondere dient sie zur Kontrolle unerwünschten Pflanzenwachstums.

Demnach betrifft die vorliegende Erfindung auch obigen Verwendungszwecken entsprechende Verfahren zur Behandlung von Pflanzen, wobei man eine geeignete Menge an erfindungsgemäßem Copolymer appliziert.

Besondere Vorteile werden insbesondere im Anbau von Allium cepa, Ananas comosus, Arachis hypogaea, Asparagus officinalis, Beta vulgaris spec. altissima, Beta vulgaris spec. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa, Phaseolus lunatus, Phaseolus vulgaris, Picea abies, Pinus spec., Pisum sativum, Prunus avium, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera, Zea mays erzielt.

Darüber hinaus können die erfindungsgemäß zu verwendenden Copolymere auch in Kulturen, die gegen die Wirkung von Herbiziden tolerant sind, verwendet werden. Derartige Kulturen können beispielsweise durch Züchtung und auch gentechnische Methoden erhalten werden.

Zumindest ein Teil der zu verwendenden Copolymere ist an sich bekannt. Beispielsweise beschreiben die US-A-5,008,032, EP 0 785 717 B1, EP 0 412 389 A1, WO 91/02094 und WO 94/15706 geeignete Copolymere.

Der Begriff "Monomereinheit" meint im Rahmen der vorliegenden Offenbarung ein einpolymerisiertes Monomer, wobei das einpolymerisierte Monomer, d.h. die Monomereinheit, im Vergleich zum eigentlichen, in die Polymerisationreaktion eingetragenen Monomer nicht nur durch die Polymerisationsreaktion strukturell verändert ist, sondern darüber hinaus auch weitere Modifikationen aufweisen kann. So können sich insbesondere die Monomereinheiten der Dicarbonsäuren bzw. Dicarbonsäurederivate von den in die Reaktion eingetragenen Monomeren durch partielle oder vollständige Solvolyse, d.h. insbesondere Hydrolyse, Alkoholye oder Aminolyse, und/oder Derivatisierung, d.h. insbesondere Veresterung, Amidisierung oder Imidisierung, und/oder durch Neutralisation ableiten.

Als Olefine für die Monomereinheiten (i) eignen sich im Prinzip beliebige ungesättigte Kohlenwasserstoffe mit wenigstens einer ethylenisch ungesättigten, polymerisierbaren Doppelbindung. Olefine mit einer terminalen Doppelbindung sind von Vorteil. Bevorzugt sind monoethylenisch ungesättigte Olefine. Besonders bevorzugt sind monoethylenisch ungesättigte Olefine mit einer terminalen Doppelbindung.

Bevorzugte Olefine weisen 4 bis 40, insbesondere 4 bis 24 und vorzugsweise 8 bis 24 Kohlenstoffatome auf. Gemäß einer besonderen Ausführungsform weisen die Olefine 8 oder 18 oder 20 bis 24 Kohlenstoffatome auf.

Zu den geeigneten Olefinen gehören beispielsweise Buten-1, Buten-2, Butadien, 2-Methylpropen-1 (Isobuten), Penten-1, Isopren, 2-Methylbuten-1, 3-Methylbuten-1, Hexen-1, Cyclohexadien, 2-Methylpenten-1, 3-Methylpenten-1, 4-Methylpenten-1, 2-Ethylbuten-1, 4,4-Dimethylbuten-1, 2,4-Dimethylbuten-1, 2,3-Dimethylpenten-1, 3,3-Dimethylpenten-1, 2,4-Dimethylpenten-1, 3,4-Dimethylpenten-1, 4,4-Dimethylpenten-1, Octen-1, 2,4,4-Trimethylpenten-1, 2,4,4-Trimethylpenten-2, Diisobuten, insbesonder solches, das technisch als Isomerengemisch aus im Wesentlichen 2,4,4-Trimethylpenten-1 und 2,4,4-Trimethylpenten-2, z.B. in einem Verhältnis von ca. 80 Gew.-% zu ca. 20 Gew. %, vorliegt, 4,4-Dimethylhexen-1, 2-Ethylhexen-1, Oligo- und Polyisobutene mit einem Molekulargewicht von kleiner als 2000, Oligopropene mit einem Molekulargewicht von kleiner als 1000, Decen-1, Dodecen-1, Tetradecen-1, Hexadecen-1, Heptadecen-1, Octadecen-1, C₁₈-Olefin-1, C₂₀-Olefin-1, C₂₂-Olefin-1, C₂₄-Olefin-1, C₂₀- bis C₂₄-Olefin-1, C₂₄-bis C₂₈-Olefin-1, C₃₀-Olefin-1, C₃₅-Olefin-1, C₃₅-Olefin-1, Styrol, alkylsubstituierte Styrole, wie alpha-Methylstyrol, tert.-Butylstyrol, Vinyltoluol, cyclische Olefine, wie Cycloocten, sowie Gemische dieser Monomere.

Demnach umfassen die Copolymere insbesondere Monomereinheiten (i) der Formel (VIIp) 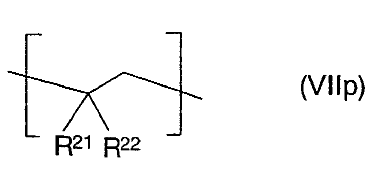 worin
- R²¹, R²²: unabhängig voneinander für Wasserstoff, verzweigtes oder lineares, gesättigtes oder ungesättigtes C₂₋₃₈-Alkyl oder gegebenenfalls C₁₋₄-Alkyl-substituiertes Phenyl stehen.

Vorzugsweise steht in Formel (VIIp) R²¹ für Waserstoff. Bevorzugte Alkylreste weisen 2 und vorzugsweise 6 bis 22 und gemäß einer besonderen Ausführungsform 6 oder 16 oder 18 bis 22 Kohlenstoffatome auf. Insbesondere ist es bevorzugt, wenn R²¹ Wasserstoff ist und R²² für einen dieser Alkylreste steht.

Bevorzugt sind hiervon Isobuten, Diisobuten, C₁₈-Olefine und C₂₀-C₂₄-Olefine.

Als Vinylether für die Monomereinheiten (i) eignen sich insbesondere Vinylether, deren Alkoholteil 1 bis 30 und vorzugsweise 1 bis 20 Kohlenstoffatome aufweist. Zu nennen sind hier insbesondere C₁-C₃₀-Alkylvinylether, wobei die Alkylreste linear, verzweigt oder cyclisch, unsubstituiert oder substituiert sein können. Geeignete Alkylvinylether sind beispielsweise Methylvinylether, Ethylvinylether, Propylvinylether, iso-Propylvinylether, Butylvinylether, Dodecylvinylether.

Gemäß einer Ausführungsform enthalten erfindungsgemäße Copolymere eine Art von Monomereinheit (i), z.B. Monomereinheiten eines Olefins oder eines Vinylethers. Gemäß einer weiteren Ausführungsform enthalten erfindungsgemäße Copolymere zwei oder mehrere Arten von Monomereinheiten (i), z.B. Monomereinheiten mehrerer Olefine oder mehrerer Vinylether bzw. wenigstens eines Olefins und wenigstens eines Vinylethers.

Gemäß einer bevorzugten Ausführungsform setzen sich die im Copolymer vorhandenen Monomereinheiten (i) im Wesentlichen aus Monomereinheiten eines Olefins zusammen.

Gemäß einer weiteren bevorzugten Ausführungsform seztzen sich die im Copolymer vorhandenen Monomereinheiten (i) aus 25 mol-% bis 99,9 mol-% und insbesondere 75 mol-% bis 99,9 mol-% Monomereinheiten eines Olefins und 0,1 mol-% bis 75 mol-% und insbesondere 0,1 mol-% bis 25 mol-% Monomereinheiten eines Vinylethers zusammen.

Als Monomereinheiten (ii) eignen sich ethylenisch ungesättigte Dicarbonsäuren und deren Derivate wie Dicarbonsäureanhydride, -monoester, -diester, -monoamide, -diamide und -imide.

Ethylenisch ungesättigte Dicarbonsäuren mit 4 bis 8 und insbesondere 4 bis 6 Kohlenstoffatomen sind in diesem Zusammenhang bevorzugt.

Insbesondere sind Maleinsäure, Itaconsäure, Mesaconsäure, Citraconsäure und Methylenmalonsäure zu nennnen. Von diesen Carbonsäuren sind Itaconsäure und aus praktischen Gründen Maleinsäure besonders bevorzugt.

Für die Dicarbonsäurederivate gilt entsprechendes.

Demnach sind Itaconsäureanhydrid und vor allem Maleinsäureanhydrid bevorzugte Dicarbonsäureanhydride.

Zu den geeigneten Dicarbonsäureestern gehören sowohl Mono- als auch Diester, deren Alkoholteil gleich oder verschieden sein kann. Demnach sind Maleinsäuremonoester, -diester, Itaconsäuremonoester und -diester bevorzugt.

Als Alkoholteil können die Dicarbonsäureester lineare oder verzweigte, gesättigte oder ungesättigte, primäre, sekundäre oder tertiäre Alkoholreste aufweisen. Zu nennen sind hier insbesondere Alkoholreste der allgemeinen Formel (I)

(R1)ₙ-X-(CHR²CH₂O)_{w}-(CHR₃CH₂O)ₓ-(CHR⁴(CH₂)yO)_{z}- (I),

worin
- R¹: für Wasserstoff, verzweigtes oder lineares, gesättigtes oder ungesättigtes C₁₋₄₀-Alkyl steht;
- R², R³, R⁴: unabhängig voneinander für Wasserstoff oder C₁₋₄-Alkyl stehen;
- w, x, z: unabhängig voneinander einem Wert von 0 bis 100 entspre- chen;
- y: einem Wert von 1 bis 20, vorzugsweise von 1, entspricht;
- X: für N oder 0 steht,
wobei n = 1 ist, wenn X = O ist, oder n = 2 ist und die Summe aus w, x, z wenigstens 1 beträgt, wenn X = N ist.

Besondere Ausführungsformen von Alkoholen der Formel (I) ergeben sich, falls w, x, und z Null sind (nicht alkoxylierte Alkoholreste); falls z einem Wert von 1 bis 100 entspricht und w und x Null sind (Alkoxylate wie Ethoxylate (R⁴ = H; y = 1) oder Propoxylate (R⁴ = CH₃; y = 1); falls w Null ist und x und z unabhängig voneinander einem Wert von 1 bis 100 entsprechen (EO/PO-Blockcopolymere mit beispielsweise einer EO-PO-Blockanordnung (y=1; R³=CH₃; R⁴=H) oder einer PO-EO-Blockanordnung (y=1; R³=H; R₄=CH₃); falls w, x und z unabhängig voneinander einem Wert von 1 bis 100 entsprechen (EO/PO/EO-Blockcopolymere mit beispielsweise einer EO-PO-EO-Blockanordnung (y=1; R²=H; R³=CH₃; R⁴=H) oder einer PO-EO-PO-Blockanordnung (y=1; R²=CH₃; R³=H; R⁴=CH₃)).

Als erfindungsgemäß geeignet haben sich insbesondere gegebenenfalls alkoxylierte Alkoholreste der Formel (I) erwiesen, worin R¹ für einen Alkylrest mit vorzugsweise 1 bis 30 Kohlenstoffatomen steht, wobei die längerkettigen und insbesondere diejenigen mit 12 bis 24 Kohlenstoffatomen bevorzugt sind.

Ganz besonders geeignet sind Alkoholalkoxylate und vor allem Alkoholethoxylatreste der Formel (Ia)

R¹-O-(C₂H₄O)_{z}- (Ia)

worin
- R¹: obige Bedeutung besitzt und vorzugsweise für verzweigtes oder lineares, gesättigtes oder ungesättigtes C₁₂₋₂₄-Al- kyl steht; und
- z: einem Wert von 1 bis 100 entspricht und vorzugsweise zwischen 5 und 100 liegt.

Zu den geeigneten Dicarbonsäureamiden gehören sowohl Mono- als auch Diamide, deren Aminteil gleich oder verschieden sein kann. Demnach sind Maleinsäuremonoamide, -diamide, Itaconsäuremonoamide und -diamide bevorzugt.

Als Aminteil können die Amide Ammoniak und/oder lineare oder verzweigte, gesättigte oder ungesättigte, primäre oder sekundäre Amine mit 1 bis 100 und vorzugsweise 1 bis 40 Kohlenstoffatomen, insbesondere C₁-C₄₀-Alkylamine und Di-(C₁-C₄₀-alkyl)amine, aufweisen. Die Alkylamine und Dialkylamine können unsubstituiert oder substituiert sein. So können die Alkylreste der Amine als Substituenten zum Beispiel Säuregruppen oder Alkoholgruppen aufweisen. Beispiele sind Ethylamin, Isopropylamin, Diisopropylamin, n-Butylamin, Hexylamin, Distearylamin, Dioleylamin, Ethanolamin, Din-propanolamin, Morpholin oder Aminosäuren.

Bevorzugte Dicarbonsäureimide sind Maleinsäureimide und Itaconsäureimide. Für den Aminteil geeigneter Dicarbonsäureimide gelten die Ausführungen zu den Dicarbonsäureamiden entsprechend.

In der Regel enthalten erfindungsgemäße Copolymere mehrere Arten von Monomereinheiten (ii), z.B. Monomereinheiten einer Dicarbonsäure und wenigstens eines Dicarbonsäurederivates. Gemäß einer besonderen Ausführungsform leiten sich die im Copolymer vorhandenen Monomereinheiten (ii) von einer und insbesondere einer der oben als bevorzugt beschriebenen Dicarbonsäuren ab. Als besonders geeignet haben sich demnach Copolymere erwiesen, deren Monomereinheiten (ii) sich im Wesentlichen aus Monomereinheiten der Maleinsäure und Derivaten davon zusammensetzen.

Gemäß einer weiteren bevorzugten Ausführungsform setzen sich die im Copolymer vorhandenen Monomereinheiten (ii) aus 0,1 mol-% bis 99,9 mol-% und insbesondere 25 mol-% bis 99,9 mol-% Monomereinheiten einer Dicarbonsäure, vorteilhafterweise der Maleinsäure, und 0,1 mol-% bis 99,9 mol-% und insbesondere 0,1 mol-% bis 75 mol-% Monomereinheiten eines Dicarbonsäurederivates, vorteilhafterweise eines Maleinsäuremonoesters, der vorzugsweise einen der oben angegebenen Alkohole der Formel (I) bzw. (Ia) aufweist, zusammen .

Demnach umfassen die Copolymere insbesondere Monomereinheiten (ii) der Formel (VIIq1) und/oder der Formel (VIIq2) 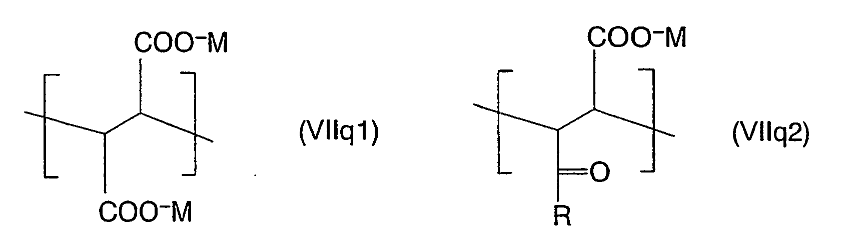 worin
- die Reste M: jeweils unabhängig voneinander für Wasserstoff oder das Äquivalent eines Kations stehen, das ausgewählt ist unter Alkali-, Erdalkali- und Übergangsmetall- kationen, insbesondere Na⁺, K⁺, Mg⁺⁺, Ca⁺⁺ und Zn⁺⁺, NH₄⁺, sowie quaternären Ammoniumkationen, insbeson- dere Alkylammonium, Dialkylammonium, Trialkylammo- nium und Tetraalkylammonium; und
- R: für einen der oben beschriebenen Alkohol- oder Aminreste steht.

Vorzugsweise steht in Formel (VIIq2) R für einen Alkoholrest der Formel (I) und insbesondere der Formel (Ia). M steht vorzugsweise für Wasserstoff oder ein Alkalimetallkation.

Als Monomereinheiten (iii) eignen sich prinzipiell beliebige copolymerisierbare, ethylenisch ungesättigte Comonomere mit wenigstens einer Doppelbindung, insbesondere monoethylenisch ungesättigte Comonomere.

Insbesondere zu nennen sind beispielsweise Acrylsäure oder Methacrylsäure sowie deren Salze, Ester und Amide. Die Salze können von jedem beliebigen nicht toxischen Metall, Ammonium oder substituierten Ammonium-Gegenionen, z.B. obigen unter M genannten Kationen, abgeleitet sein.

Die Ester können abgeleitet sein von linearen C₁-C₄₀-, verzweigten C₃-C₄₀- oder carbocyclischen C₃-C₄₀-Alkoholen, von mehrfachfunktionellen Alkoholen mit 2 bis etwa 8 Hydroxylgruppen wie Ethylenglycol, Hexylenglycol, Glycerin und 1,2,6-Hexantriol, von Aminoalkoholen oder von Alkoholethern wie Methoxyethanol und Ethoxyethanol, (Alkyl)Polyethylenglykolen, (Alkyl)Polypropylenglykolen oder ethoxylierten Fettalkoholen, beispielsweise mit 1 bis 200 Ethylenoxid-Einheiten umgesetzten C₁₂-C₂₄-Fettalkoholen.

Die Amide können unsubstituiert, N-alkylsubstituiert oder N-alkylaminomonosubstituiert oder N,N-dialkylsubstituiert oder N,N-dialkylaminodisubstituiert vorliegen, worin die Alkyl- oder Alkylaminogruppen von linearen C₁-C₄₀-, verzweigten C₃-C₄₀- oder carbocyclischen C₃-C₄₀-Einheiten abgeleitet sind. Außerdem können die Alkylaminogruppen quaternisiert sein.

Ebenfalls als Monomereinheiten (iii) verwendbare Comonomere sind substituierte Acrylsäuren sowie Salze, Ester und Amide davon, wobei die Substituenten an den Kohlenstoffatomen in der Position 2 oder 3 der Acrylsäure stehen und unabhängig voneinander ausgewählt sind unte C₁-C₄-Alkyl, -CN und COOH. Besonders bevorzugt sind hier Methacrylsäure, Ethacrylsäure und 3-Cyanoacrylsäure zu nennen. Bezüglich der Salze, Ester und Amide dieser substituierten Acrylsäuren gelten die entsprechenden Ausführungen zu den Acrylsäuren analog.

Insbesondere bevorzugt als Komponente (iii) sind Comonomere der allgemeine Formel (II):

Y-C(O)CR⁵=CHR⁶ (II)

worin
- Y: ausgewählt ist unter -OH, -OM, -OR⁷, NH₂, -NHR⁷, N(R⁷)₂, wobei die Reste R⁷ identisch oder verschieden sein können und ausgewählt sind unter Wasserstoff, linearem oder ver- zweigtem C₁-C₄₀-Alkyl, N,N-Dimethylaminoethyl, 2-Hydro- xyethyl, 2-Methoxyethyl, 2-Ethoxyethyl, Hydroxypropyl, Methoxypropyl und Ethoxypropyl;
- M: das Äquivalent eines Kations ist, das ausgewählt ist un- ter Alkali-, Erdalkali- und Übergangsmetallkationen, ins- besondere Na⁺, K⁺, Mg⁺⁺, Ca⁺⁺ und Zn⁺⁺, NH₄⁺, sowie quater- nären Ammoniumkationen, insbesondere Alkylammonium, Dial- kylammonium, Trialkylammonium und Tetraalkylammonium; und
- R⁵, R⁶: unabhängig voneinander ausgewählt sind unter Wasserstoff, linearem oder verzweigtem C₁-C₈-Alkyl, Methoxy, Ethoxy, 2-Hydroxyethoxy, 2-Methoxyethoxy und 2-Ethoxyethyl.

Ferner eignen sich N,N-Dialkylaminoalkylacrylate- und -methacrylate sowie N-N-Dialkylaminoalkylacryl- und -methacrylamide der allgemeinen Formel (III)

R¹¹R¹²N-R¹⁰-z(R⁹)_{g}-c(O)CR⁸=CH₂ (III)

worin
- R⁸: für Wasserstoff oder C₁-C₈-Alkyl steht;
- R⁹: für Wasserstoff oder Methyl steht;
- R¹⁰: für C₁-C₂₄-Alkylen steht, das durch Alkyl substituiert sein kann;
- R¹¹, R¹²: unabhängig voneinander für C₁₋₄₀-Alkyl stehen;
- Z: für Stickstoff steht, falls g = 1 ist, oder für Sauer- stoff steht, falls g = 0 ist.

Bevorzugte Comonomere der Formel (III) sind N,N-Dimethylaminomethyl(meth)acrylat, N,N-Diethylaminomethyl(meth)acrylat, N,N-Dimethylaminoethyl(meth)acrylat, N,N-Diethylaminoethyl(meth)acrylat, N-[3-(dimethylamino)propyl]methacrylamid und N-[3-(dimethylamino)propyl]acrylamid. Es sei an dieser Stelle bemerkt, dass der Ausdruck "(meth)acrylat" sowohl für "acrylat" als auch für "methacrylat" steht.

Weiterhin geeignet sind auch Allylester von linearen C₁-C₄₀-, verzweigten C₃-C₄₀- oder carbocyclischen C₃-C₄₀-Carbonsäuren, Vinylhalogenide oder Allylhalogenide, bevorzugt Vinylchlorid und Allylchlorid, Vinylformamid, Vinylmethylacetamid, Vinylamin; vinyllactame, bevorzugt Vinylpyrrolidon und vinylcaprolactam; Vinyl- oder Allyl-substituierte heterocyclische Verbindungen, bevorzugt Vinylpyridin, Vinyloxazolin und Allylpyridin.

Auch eignen sich N-Vinylimidazole der allgemeinen Formel (IV) 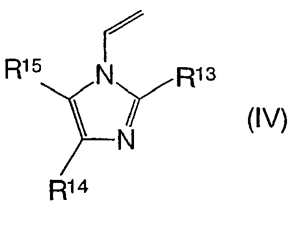 worin
- R¹³- R¹⁵: unabhängig voneinander für Wasserstoff, C₁-C₄-Alkyl oder Phenyl stehen.

Ebenfalls eignen sich Diallylamine der allgemeinen Formel (V) 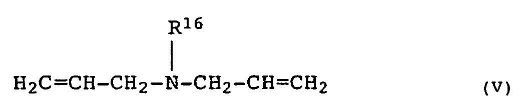 worin
- R¹⁶: für C₁-C₂₄-Alkyl steht.

Auch Ethylen, Propylen und Vinylidenchlorid eigenen sich prinzipiell als Comonomere für die Monomereinheiten (iii).

Insbesondere zu nennende Comonomere für die Monomereinheiten (iii) sind Acrylsäure, Methacrylsäure, Ethylacrylsäure, Methylacrylat, Ethylacrylat, Propylacrylat, n-Butylacrylat, iso-Butylacrylat, t-Butylacrylat, 2-Ethylhexylacrylat, Decylacrylat, Methylmethacrylat, Ethylmethacrylat, Propylmethacrylat, n-Butylmethacrylat, iso-Butylmethacrylat, t-Butylmethacrylat, 2-Ethylhexylmethacrylat, Decylmethacrylat, Methylethacrylat, Ethylethacrylat, n-Butylethacrylat, iso-Butylethacrylat, t-Butylethacrylat, 2-Ethylhexylethacrylat, Decylethacrylat, Stearyl(meth)acrylat, 2,3-Dihydroxypropylacrylat, 2,3-Dihydroxypropylmethacrylat, 2-Hydroxyethylacrylat, Hydroxypropylacrylate, 2-Hydroxyethylmethacrylat, 2-Hydroxyethylethacrylat, 2-Methoxyethylacrylat, 2-Methoxyethylmethacrylat, 2-Methoxyethylethacrylat, 2-Ethoxyethylmethacrylat, 2-Ethoxyethylethacrylat, Hydroxypropylmethacrylate, Glycerylmonoacrylat, Glycerylmonomethacrylat, Polyalkylenglykol(meth)acrylate, ungesättigte sulfonsäuren wie zum Beispiel Acrylamidopropansulfonsäure;
Acrylamid, Methacrylamid, Ethacrylamid, N-Methylacrylamid, N,N-Dimethylacrylamid, N-Ethylacrylamid, N-Isopropylacrylamid, N-Butylacrylamid, N-t-Butylacrylamid, N-Octylacrylamid, N-t-Octylacrylamid, N-Octadecylacrylamid, N-Phenylacrylamid, N-Methylmethacrylamid, N-Ethylmethacrylamid, N-Dodecylmethacrylamid, 1-Vinylimidazol, 1-Vinyl-2-methylvinylimidazol, N,N-Dimethylaminomethyl(meth)acrylat, N,N-Diethylaminomethyl(meth)acrylat, N,N-Dimethylaminoethyl(meth)acrylat, N,N-Diethylaminoethyl(meth)acrylat, N,N-Dimethylaminobutyl(meth)acrylat,N,N-Diethylaminobutyl(meth)acrylat, N,N-Dimethylaminohexyl(meth)acrylat, N,N-Dimethylaminooctyl(meth)acrylat, N,N-Dimethylaminododecyl(meth)acrylat, N-[3-(dimethylamino)propyl]methacrylamid, N-[3-(dimethylamino)propyl]acrylamid, N-[3-(dimethylamino)butyl]methacrylamid, N-[8-(dimethylamino)octyl]methacrylamid, N-[12-(dimethylamino)dodecyl]methacrylamid, N-[3-(diethylamino)propyl]methacrylamid, N-[3-(diethylamino)propyl]acrylamid;
Fumarsäure, Crotonsäure, Itaconsäure, Diallyldimethylammoniumchlorid, Vinylformamid, Vinylmethylacetamid, Vinylamin; Methylvinylketon, Vinylpyridin, Vinylimidazol, Vinylfuran, Styrol, Styrolsulfonat, Allylalkohol, und Mischungen daraus.

Von diesen sind besonders bevorzugt Acrylsäure, Methacrylsäure, Maleinsäure, Fumarsäure, Crotonsäure, Methylacrylat, Methylmethacrylat, Ethylacrylat, Ethylmethacrylat, n-Butylacrylat, n-Butylmethacrylat, t-Butylacrylat, t-Butylmethacrylat, Isobutylacrylat, Isobutylmethacrylat, 2-Ethylhexylacrylat, Stearylacrylat, Stearylmethacrylat, N-t-Butylacrylamid, N-Octylacrylamid, 2-Hydroxyethylacrylat, Hydroxypropylacrylate, 2-Hydroxyethylmethacrylat, Hydroxypropylmethacrylate, Alkylenglykol(meth)acrylate, Styrol, ungesättigte Sulfonsäuren wie zum Beispiel Acrylamidopropansulfonsäure, Vinylpyrrolidon, Vinylcaprolactam, Vinylformamid, Vinylmethylacetamid, Vinylamin, 1-Vinylimidazol, 1-Vinyl-2-methylimidazol, N,N-Dimethylaminomethylmethacrylat und N-[3-(dimethylamino)propyl]methacrylamid; 3-Methyl-l-vinylimidazoliumchlorid, 3-Methyl-1-vinylimidazoliummethylsulfat, quaternisiertes N,N-Dimethylaminoethylmethacrylat, N-[3-(dimethylamino)propyl]methacrylamid.

Comonomere bzw. entsprechende Monomoreinheiten mit einem basischen Stickstoffatom können dabei auf folgende Weise quarternisiert werden:

Zur Quaternisierung der Amine eignen sich beispielsweise Alkylhalogenide mit 1 bis 24 C-Atomen in der Alkylgruppe, z.B. Methylchlorid, Methylbromid, Methyliodid, Ethylchlorid, Ethylbromid, Propylchlorid, Hexylchlorid, Dodecylchlorid, Laurylchlorid und Benzylhalogenide, insbesondere Benzylchlorid und Benzylbromid. Weitere geeignete Quaternierungsmittel sind Dialkylsulfate, insbesondere Dimethylsulfat oder Diethylsulfat. Die Quaternierung der basischen Amine kann auch mit Alkylenoxiden wie Ethylenoxid oder Propylenoxid in Gegenwart von Säuren durchgeführt werden. Bevorzugte Quaternierungsmittel sind: Methylchlorid, Dimethylsulfat oder Diethylsulfat.

Die Quaternisierung kann vor oder nach der Polymerisation durchgeführt werden.

Außerdem können die Umsetzungsprodukte von ungesättigten Säuren, wie z.B. Acrylsäure oder Methacrylsäure, mit einem quaternisierten Epichlorhydrin der allgemeinen Formel (VI) 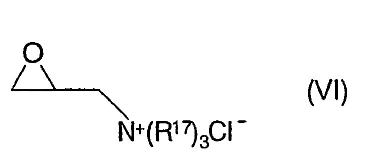 worin
- R¹⁷: für C₁-C₄₀-Alkyl steht,
verwendet werden.

Beispiele für derartige Umsetzungsprodukte sind (Meth)acryloyloxyhydroxypropyltrimethylammoniumchlorid und (Meth)acryloyloxyhydroxypropyltriethylammoniumchlorid.

Die basischen Comonomere können auch kationisiert werden, indem sie mit Mineralsäuren, wie z.B. Schwefelsäure, Chlorwasserstoffsäure, Bromwasserstoffsäure, Iodwasserstoffsäure, Phosphorsäure oder Salpetersäure, oder mit organischen Säuren, wie z.B. Ameisensäure, Essigsäure, Milchsäure, oder Citronensäure, neutralisiert werden.

Zusätzlich zu den oben genannten Comonomeren können für die Monomereinheiten (iii) sogenannte Makromonomere wie zum Beispiel silikonhaltige Makromonomere mit einer oder mehreren, radikalisch polymerisierbaren Gruppen oder Alkyloxazolin-Makromonomere eingesetzt werden, wie sie zum Beispiel in der EP 408 311 beschrieben sind. Auf diese Druckschrift und die darin offenbarten Makromonomere wird hiermit ausdrücklich Bezug genommen.

Des weiteren können fluorhaltige Monomere, wie sie beispielsweise in der EP 558 423 beschrieben sind, sowie vernetzend wirkende oder das Molekulargewicht regelnde Verbindungen in Kombination oder alleine eingesetzt werden.

Gemäß einer besonderen Ausführungsform enthalten erfindungsgemäße Copolymere im Wesentlichen keine Monomereinheiten (iii). Diese Copolymere setzen sich demnach im Wesentlichen aus Monomereinheiten (i) und (ii) zusammen. Vorzugsweise beträgt dann der Anteil an Monomereinheiten (i) 30 mol-% bis 70 mol-% und insbesondere 40 mol-% bis 60 mol-% und der Anteil an Monomereinheiten (ii) 30 mol-% bis 70 mol-% und insbesondere 40 mol-% bis 60 mol-%. Eine besondere Art von erfindungsgemäßem Copolymer setzt sich aus etwa 50 mol-% Monomereinheiten (i) und etwa 50 mol-% Monomereinheiten (ii) zusammen, die vorteilhafterweise in alternierender Reihenfolge angeordnet sind. Es ist hierbei der Tatsache Rechnung zu tragen, dass bei relativ geringen Molekulargewichten durch eine Häufung bestimmter Endmonomereinheiten eine Abweichung von den angebenen Werten auftreten kann.

Gemäß einer besonderen Ausführungsform enthalten erfindungsgemäße Copolymere Monomereinheiten (iii). Vorzugsweise beträgt der Anteil an Monomereinheiten (iii) bis zu 40 mol-% und insbesondere bis zu 20 mol-%.

Die Copolymere weisen in der Regel Carboxylgruppen auf, die in Säureform oder in Salzform vorliegen können. Bei den Salzen der zuvor beschriebenen Copolymere handelt es sich demnach insbesondere um Carboxylate, d.h. zumindest ein Teil der im Copolymer vorhandenen Carboxylgruppen liegt in Salzform vor, und zwar in der Regel als Basenadditionsalz mit einem Kation M, das ausgewählt ist unter Alkali-, Erdalkali- und Übergangsmetallkationen wie Na⁺, K⁺, Mg⁺⁺, Ca⁺⁺ und Zn⁺⁺, NH₄⁺, sowie quaternären Ammoniumkationen wie Alkylammonium, Dialkylammonium, Trialkylammonium und Tetraalkylammonium.

Insbesondere ist es bevorzugt, wenn wenigstens ein Teil der Carboxylgruppen in Salzform vorliegt. Vorteilhafterweise beträgt der auf die theoretisch mögliche Menge an Carboxylgruppen im Copolymer bezogene Anteil an Carboxylatgruppen wenigstens etwa 50 mol-% und insbesondere wenigstens etwa 75 mol-%. Einem besonderen Aspekt zufolge bemisst sich dieser Anteil an der Kettenlänge der Monomereinheit (i). So sind bei relativ langkettigen Monomereinheiten (i), z.B. Olefinen mit mehr als 30 Kohlenstoffatomen, vergleichsweise hohe Anteile an Carboxylatgruppen von Vorteil, während bei relativ kurzkettigen Monomereinheiten (i), z.B. Olefinen mit 20 bis 24 Kohlenstoffatomen oder weniger, vergleichsweise geringe Anteile an Carboxylatgruppen bevorzugt sind. Andererseits kann der Anteil an Carboxylatgruppen vergleichsweise gering gewählt werden, wenn relativ große Anteile der Carboxylgruppen im Copolymer mit hydrophilen Gruppen derivatisiert sind. Einem weiteren Aspekt zufolge es bevorzugt, den Anteil der Carboxylgruppen so zu wählen, dass der pH-Wert einer wässrigen Lösung des entsprechenden Copolymers in einem Bereich von etwa 4 bis 10 und vorteilhafterweise von 5 bis 8 liegt.

Die erfindungsgemäß zu verwendenden Copolymere weisen in der Regel einen relativ geringen Kontaktwinkel auf. Besonders bevorzugt sind Copolymere, deren Kontaktwinkel weniger als 120° und vorzugsweise weniger als 100° beträgt, wenn dieser anhand einer 2 Gew.-% Copolymer enthaltenden; wässrigen Lösung auf einer Paraffinoberfläche in an sich bekannter Art und Weise bestimmt wird.

Die oberflächenaktiven Eigenschaften der Copolymere hängen insbesondere von Art und Verteilung der Carboxyl- und Carbonsäurederivat-Gruppierung ab. Die nach der Pendant Drop Methode bestimmbare Oberflächenspannung erfindungsgemäß zu verwendender Copolymere CP liegt vorzugsweise in einem Bereich von 30 bis 80 mN/m und insbesondere 40 bis 60 mN/m für eine 0,1 Gew.% Copolymer enthaltende Lösung, in einem Bereich von 25 bis 80 mN/m und insbesonden 35 bis 60 mN/m für eine 0,5 Gew.% Copolymer enthaltende Lösung, bzw. in einem Breich von 20 bis 70 mN/m und insbesondere 30 bis 55 mN/ m für eine 2,0 Gew.% Copolymer enthaltende Lösung. Erfindungsgemäß bevorzugt zu verwendende Copolymere qualifizieren daher als amphiphile Substanzen.

Das gewichtsmittlere Molekulargewicht der erfindungsgemäßen Polymerisate liegt zwischen 500 und 2.000.000, bevorzugt zwischen 1.000 und 500.000, besonders bevorzugt zwischen 2.000 und 100.000.

Die erfindungsgemäßen Polymerisate können durch Copolymerisation geeigneter, den Monomereinheiten (i) und (ii) entsprechender Monomere (Monomere der Gruppen (i) bzw. (ii)) und gegebenenfalls weiterer, den Monomereinheiten (iii) entsprechender Comonomere (Comonomere der Gruppe (iii)) hergestellt werden. Dazu können die Monomere bzw. Comonomere mit Hilfe von Radikale bildenden Initiatoren als auch durch Einwirkung energiereicher Strahlung, worunter auch die Einwirkung energiereicher Elektronen verstanden werden soll, polymerisiert werden (vgl. z.B. EP 9 169 A1, EP 9 170 A1 und EP 276 464, auf die ausdrücklich Bezug genommen wird).

Als Initiatoren für die radikalische Polymerisation können die hierfür üblichen Peroxo- und/oder Azo-Verbindungen eingesetzt werden, beispielsweise Alkali- oder Ammoniumperoxidisulfate, Diacetylperoxid, Dibenzoylperoxid, Succinylperoxid, Di-tert.-butylperoxid, tert.-Butylperbenzoat, tert.-Butylperpivalat, tert.-Butylpermaleinat, Cumolhydroperoxid, Diisopropylperoxidicarbamat, Bis-(o-toluoyl)-peroxid, Didecanoylperoxid, Dioctanoylperoxid, Dilauroylperoxid, tert.-Butylperisobutyrat, tert.-Butylperacetat, Di-tert.-Amylperoxid, tert.-Butylhydroperoxid, Azo-bis-isobutyronitril, Azo-bis-(2-amidonopropan)dihydrochlorid oder 2,2'-Azo-bis-(2-methyl-butyronitril). Geeignet sind auch Initiatormischungen oder Redox-Initiator-Systeme, wie z.B. Ascorbinsäure/Eisen(II)sulfat/Natriumperoxodisulfat, tert.-Butylhydroperoxid/Natriumdisulfit, tert.-Butylhydroperoxid/Natriumhydroxymethansulfinat. Bevorzugt werden organische Peroxide eingesetzt.

Die verwendeten Mengen an Initiator bzw. Initiatorgemischen bezogen auf eingesetzte Monomermengen liegen zwischen 0,01 und 10 Gew.-%, vorzugsweise zwischen 0,1 und 5 Gew.-%.

Die Polymerisation erfolgt in der Regel in einem Temperaturbereich von 40 bis 200°C, bevorzugt im Bereich von 50 bis 140°C, besonders bevorzugt im Bereich von 60 bis 110°C. Sie wird üblicherweise unter atmosphärischem Druck durchgeführt, kann jedoch auch unter vermindertem oder erhöhtem Druck, in letzterem Fall vorzugsweise zwischen 1 und 5 bar, ablaufen.

Die Polymerisation kann beispielsweise als Lösungspolymerisation, Polymerisation in Substanz, Emulsionspolymerisation, umgekehrte Emulsionspolymerisation, Suspensionspolymerisation, umgekehrte Suspensionspolymerisation oder Fällungspolymerisation durchgeführt werden, ohne dass die verwendbaren Methoden darauf beschränkt sind.

Bei der Polymerisation in Substanz kann man so vorgehen, dass die Monomere der Gruppe (i), die Monomere der Gruppe (ii) und gegebenenfalls weitere Comonomere der Gruppe (iii) miteinander vermischt werden und nach Zugabe eines Polymerisationsinitiators die Mischung auspolymerisiert wird. Die Polymerisation kann auch halbkontinuierlich durchgeführt werden, indem man zunächst einen Teil, z.B. 10 %, des zu polymerisierenden Gemisches aus Monomeren bzw. Comonomeren der Gruppen (i), (ii) und gegebenenfalls (iii) sowie Initiator vorlegt, das Gemisch auf Polymerisationstemperatur erhitzt und nach dem Anspringen der Polymerisation den Rest der zu polymerisierenden Mischung nach Fortschritt der Polymerisation zugibt. Die Polymerisate können auch dadurch erhalten werden, dass man die Monomere der Gruppe (i) in einem Reaktor vorlegt, auf Polymerisationstemperatur erwärmt und mindestens ein Monomer der Gruppe (ii), und eventuell ein weiteres oder mehere weitere Comonomere der Gruppe (iii) und Polymerisationsinitiator entweder auf einmal, absatzweise oder vorzugsweise kontinuierlich zufügt und polymerisiert. Die Polymerisation kann dabei unter Zuhilfenahme von Schutzkolloiden durchgeführt werden, wie beispielsweise in DT 2840201 beschrieben.

Falls gewünscht, kann die oben beschriebene Polymerisation auch in einem Lösemittel durchgeführt werden. Geeignete Lösemittel sind beispielsweise Alkohole, wie Methanol, Ethanol, n-Propanol, Isopropanol, n-Butanol, sek.-Butanol, tert.-Butanol, n-Hexanol und Cyclohexanol sowie Glykole, wie Ethylenglykol, Propylenglykol und Butylenglykol sowie die Methyl- oder Ethylether der zweiwertigen Alkohole, Diethylenglykol, Triethylenglykol, Glycerin und Dioxan. Bei Verwendung von ethylenisch ungesättigten Dicarbonsäurederivaten aus Gruppe (ii) verwendet man bevorzugt Lösungsmittel, die sich gegenüber den verwendeten Carbonsäurederivaten inert verhalten.

Die Polymerisation kann auch in Wasser als Lösemittel durchgeführt werden. In diesem Fall liegt zunächst eine Lösung vor, die in Abhängigkeit von der Menge der zugegebenen Monomeren der Gruppen (i) und (ii) und gegenenfalls weiterer Comonomere der Gruppe (iii) in Wasser mehr oder weniger gut löslich ist. Um wasserunlösliche Produkte, die während der Polymerisation entstehen können, in Lösung zu überführen, kann man beispielsweise organische Lösemittel zusetzen, wie einwertige Alkohole mit 1 bis 3 Kohlenstoffatomen, Aceton oder Dimethylformamid. Man kann jedoch auch bei der Polymerisation in Wasser so verfahren, dass man die wasserunlöslichen Polymerisate durch Zugabe üblicher Emulgatoren oder Schutzkolloide, z.B. Polyvinylalkohol, in eine feinteilige Dispersion überführt.

Als Emulgatoren verwendet man beispielsweise ionische oder nichtionische Tenside, deren HLB-Wert im Bereich von 3 bis 13 liegt. Zur Definition des HLB-Werts wird auf die Veröffentlichung von W.C. Griffin, J. Soc. Cosmetic Chem., Band 5, 249 (1954), hingewiesen.

Die Menge an Tensiden, bezogen auf das Polymerisat, beträgt in der Regel 0,1 bis 10 Gew.-%. Bei Verwendung von Wasser als Lösemittel erhält man Lösungen bzw. Dispersionen der Polymerisate. Sofern man Lösungen des Polymerisates in einem organischen Lösemittel bzw. in Mischungen aus einem organischen Lösemittel und Wasser herstellt, verwendet man pro 100 Gew.-Teile des Polymerisates in der Regel 5 bis 2000, vorzugsweise 10 bis 500 Gew.-Teile des organischen Lösemittels oder des Lösemittelgemisches.

Die erfindungsgemäß verwendbaren Copolymere CP oder Salze der Copolymere CP sind insbesondere erhältlich ist durch Copolymerisation
(1) wenigstens eines Olefins und/oder wenigstens eines Vinylethers,
(2) wenigstens einer ethylenisch ungesättigten Dicarbonsäure und/oder wenigstens eines ethylenisch ungesättigten Dicarbonsäurederivats, insbesondere eines Dicarbonsäureanhydrids, und gegebenenfalls
(3) wenigstens eines weiteren copolymerisierbaren Comonomers,
sowie gegebenenfalls partieller oder vollständiger Solvolyse und/ oder Derivatisierung, insbesondere Hydrolyse, Alkoholyse, Aminolyse, Veresterung, Umesterung, Amidisierung und/oder Imidisierung, der Carbonsäuren und/oder Carbonsäurederivate, speziell der Dicarbonsäureanhydridgruppen.

Insbesondere kann das aus der Copolymerisation resultierende Copolymer CP' einer oder mehreren der folgenden weiteren Verfahrensmaßnahmen unterworfen werden:
(4) einer zumindest partiellen Solvolyse derivatisierter Carbonsäuregruppen;
(5) einer Derivatisierung von Carbonsäuregruppen;
(6) einer zumindest partiellen Neutralisation von Carbonsäuregruppen.

Die zwecks Copolymerisation zu wählenden relativen Mengen an Monomeren und Comonmeren sind obigen Ausführungen zu den Verhältnissen von Monomereinheiten (i), (ii) und gegebenenfalls (iii) zu entnehmen. Insbesondere kann man 30 bis 70 mol-% und vorzugsweise 40 bis 60 mol-% wenigstens eines Olefins und/oder Vinylethers, 70 bis 30 mol-% und vorzugsweise 60 bis 40 mol-% wenigstens einer ethylenisch ungesättigten Dicarbonsäure und/oder eines Dicarbonsäurederivats sowie 0 bis 40 mol-% und vorzugsweise 0 bis 20 mol-% wenigstens eines weiteren copolymerisierbaren Comonomers copolymerisieren.

Die Art der einzusetzenden Monomere bzw. Comonomere richtet sich nicht nur nach den zu bildenden Monomereinheiten. Vielmehr ist es in vielen Fällen zweckmäßig, Monomere bzw. Comonomere zu polymerisieren, die im Anschluß an die Polymerisationreaktion in die gewünschten Monomereinheiten überführt werden. Diese Vorgehensweise ist häufig reaktions- und verfahrenstechnisch bedingt.

Insbesondere die für die Monomereinheiten (ii) verwendbaren Monomere können sich von den am Aufbau des Copolymers CP beteiligten Monomereinheiten unterscheiden. So werden häufig zunächst Dicarbonsäurederivate, wie die Anhydride oder auch Ester, polymerisiert. Die daraus gebildeten Monomereinheiten (ii') des Copolymers CP' werden anschließend in der Regel einer oder mehreren der Verfahrnsmaßnahmen (4), (5) und/oder (6) unterworfen, so dass schliesslich das Copolymer CP oder ein Salz davon resultiert. In diesem Sinne können auch Dicarbonsäureester mit kurzkettigen, leicht hydrolysierbaren Estergruppen, wie Alkylester mit vorzugsweise 1 bis 3 Kohlenstoffatomen im Alkylteil, polymerisiert werden, deren Alkoholteil anschließend abgespalten und gegebenenfalls durch einen weiteren Alkohol ersetzt werden.

Demnach enthält das durch Copolymerisation erhältliche Copolymer CP' in der Regel Carboxylgruppen und/oder derivatisierte Carboxylgruppen, z.B. Anhydrid- oder Estergruppen, die gewünschtenfalls anschließend - in der Regel unter Bildung von Carboxylgruppen und/oder weiteren Carbonsäurederivaten - in einer polymeranalogen Reaktion umgesetzt werden. Bevorzugte polymeranaloge Reaktionen sind (4) Solvolysen wie Hydrolysen, Alkoholysen oder Aminolysen von Dicarbonsäurederivaten und insbesondere Dicarbonsäureanhydriden sowie (5) Veresterungen und Amidierungen von Carboxylgruppen.

Die Umsetzung von Dicarbonsäurederivaten unter Bildung von Carboxylgruppen wird als Hydrolyse bezeichnet. Die Umsetzung unter Bildung weiterer Carbonsäurederivate kann zunächst eine Hydrolyse der Carbonsäurederivate, z.B. der Anhydridgruppen, mit anschließender Derivatisierung, z. B. Veresterung, der gebildeten Carboxylgruppen oder die direkte Derivatisierung, d.h. Umsetzung der Carbonsäuren und/oder Carbonsäurederivate, z.B. der Anhydridgruppen, unter Bildung von Carbonsäureestern oder im Sinne einer Umesterung von Carbonsäurestergruppen oder einer Alkoholyse von Carbonsäureanhydridgruppen, z.B. mit einem Alkohol, beinhalten. So kann es zweckmäßig sein, zunächst wenigstens einen Teil der derivatisierten Carboxylgruppen, z.B. Anhydridgruppen, zu hydrolysieren oder unter Derivatbildung umzusetzen. Je nachdem, welche Verfahrensvariante gewählt wird, können gegebenenfalls verbleibende derivatisierte Carboxylgruppen, z.B. Anhydridgruppen, anschließend derivatisiert, z.B. verestert, oder hydrolysiert werden, und es kann auch wenigstens ein Teil der gebildeten Carboxylgruppen oder Estergruppen derivatisiert, z.B. verestert oder umgeestert bzw. hydrolysiert werden.

Gemäß einer Ausführungsform sind erfindungsgemäß zu verwendende Copolymere CP dadurch erhältlich, daß man (ii) wenigstens ein ethylenisch ungesättigtes Dicarbonsäureanhydrid wählt und mit den übrigen Monomeren bzw. Comonomeren copolymerisiert, und wenigstens ein Teil der Anhydridgruppen des resultierenden Copolymerisationsproduktes CP' hydrolysiert und/oder unter Derivatbildung, vorzugsweise Esterbildung im Sinne einer Alkoholyse, umsetzt.

Ein besonders bevorzugtes Verfahren ist die Copolymerisation von Monomeren für Monomereinheiten (i) mit Anhydriden von ethylenisch ungesättigten Dicarbonsäuren und gegebenfalls weiteren Monomeren für Monomereinheiten (iii) und anschließender zumindest teilweiser Hydrolyse, Veresterung und/oder Amidierung. Bevorzugt ist die zumindest teilweise Hydrolyse und/oder Veresterung zu Halbestern.

Dabei kann man so vorgehen, dass man zunächst einen Teil der Anhydridgruppen unter Bildung von Halbestern umsetzt und anschließend die verbleibenden Anhydridgruppen ganz oder teilweise hydrolysiert. Man kann aber auch die Anhydridgruppen zunächst hydrolysieren und anschließend einen Teil der gebildeten Carboxylgruppen zu Halbestern umsetzen.

Die polymeranaloge Umsetzung im Anschluss an die Polymerisation kann in Gegenwart eines Lösemittels beispielsweise Aceton oder Tetrahydrofuran, durchgeführt werden. Allerdings ist es bevorzugt, dass das Copolymer CP' direkt mit dem Derivatisierungsmittel, z.B. einem der obergenannten Formel (I) entsprechenden Alkohol, oder obengenannten Aminen umgesetzt wird. Die Menge einzusetzender Reaktanten hängt von dem zu erzielenden Derivatisierungsgrad ab.

Sofern es sich bei der Derivatisierung um eine Veresterungsreaktion oder Amidierungsreaktion handelt, wird diese in üblicher Art und Weise ausgeführt, nämlich in der Regel bei erhöhter Temperatur, z.B. 50 bis 200°C und vorzugsweise bei 80 bis 150°C gegebenenfalls in Gegenwart eines üblichen Katalysators, z.B. p-Toluolsulfonsäure. Übliche Reaktionszeiten liegen im Bereich von 0,5 bis 20 und insbesondere 1 bis 10 Stunden. Bevorzugt ist die Umsetzung von im Polymer vorhandenen Anhydridgruppen. Dies kann gegenbenenfalls ohne Lösemittel oder in einem Lösemittel ausgeführt werden. Sofern ein Lösungsmittel verwendet wird, sind insbesondere diejenigen organische Fluide geeignet, die sich gegenüber Anhydridgruppen inert verhalten und die nicht nur das Ausgangsmaterial, sondern auch das Reaktionsprodukt, nämlich das zumindest zum Teil veresterte Copolymer lösen oder quellen. Toluol, Xylol, Ethylbenzol, aliphatische Kohlenwasserstoffe und Ketone, wie Aceton oder Methylethylketon, sind in diesem Zusammenhang zu nennen. Nach der Veresterung wird das Lösemittel, sofern vorhanden, aus dem Reaktionsgemisch entfernt, beispielweise durch Destillation.

Eine Hydrolyse der Copolymere kann beispielweise unter alkalischen Bedingungen durchgeführt werden. Durch Zusatz von alkalinisierenden Mitteln, beispielweise Ammonium-, Alkalimetall-, oder Erdalkalimetallbasen sowie organischen Basen, z.B. Aminen, Alkanolaminen, können Anhydrid-, Ester-, Amid- oder Imidgruppen des Copolymers hydrolysiert werden. Bevorzugt werden im Polymer vorhandene Anhydridgruppen hydrolysiert. Aus praktischen Gründen werden dazu häufig Natriumhydroxid- oder Kaliumhydroxid-Lösungen verwendet.

Zur Salzbildung können die Polymerisate vor oder nach der Polymerisation, zum Teil oder vollständig mit Basen neutralisiert werden, um so zum Beispiel die Wasserlöslichkeit oder Wasserdispergierbarkeit auf ein gewünschtes Maß einzustellen.

Als Neutralisationsmittel für Säuregruppen können zum Beispiel Mineralbasen wie Natriumcarbonat, Alkalihydroxide wie Natriumhydroxid oder Kaliumhydroxid, Erdalkalihydroxide, sowie Ammoniak, organische Basen wie Alkylamine, Dialkylamine, Trialkylamine, Aminoalkohole, speziell Isopropylamin, Ethylamin, Diisopropylamin, Diethylamin, Triisopropylamin, Triethylamin, 2-Amino-2-methyl-1-propanol, Monoethanolamin, Diethanolamin, Triethanolamin, Triisopropanolamin, Tri[(2-hydroxy)-1-propyl]amin, 2-Amino-2-methyl-1,3-propandiol, 2-Amino-2-hydroxymethyl-1,3-propandiol, sowie Diamine, wie zum Beispiel Lysin, verwendet werden.

Der Verwendung im agrotechnischen Bereich und speziell im Pflanzenschutzbereich entsprechend, können die Copolymere als stand-alone-Produkte genutzt und zusammen mit wenigstens einem wirkstoffhaltigen Mittel co-appliziert, kurz vor der Anwendung mit wenigstens einem wirkstoffhaltigen Mittel vermengt und als entsprechendes Gemisch appliziert, oder als Coformulant in der Formulierung als Ready-Mix eingearbeitet werden.

Dementsprechend betrifft die vorliegende Erfindung auch Mittel, umfassend
(a) wenigstens einen Wirkstoff zur Pflanzenbehandlung; und
(b) wenigstens ein Copolymer CP oder ein Salz des Copolymers CP.

Ein besonderer Gegenstand der vorliegenden Erfindung sind agrotechnische Mittel, die ein Copolymer CP oder ein Salz des Copolymers CP umfassen, wobei das Copolymer CP - neben Monomereinheiten (i) wenigstens eines Olefins und/oder wenigstens eines vinylethers und (iii) gegebenenfalls wenigstens eines weiteren copolymerisierbaren Monomers - Monomereinheiten (ii) sowohl wenigstens einer ethylenisch ungesättigten Dicarbonsäure als auch wenigstens eines ethylenisch ungesättigten Dicarbonsäurederivats umfasst. Obigen Ausführungen zufolge ist dieser Typ von Copolymer CP daher dadurch gekennzeichnet, dass die Copolymere CP sowohl Carboxylgruppen, die im Falle von Salzen der Copolymere zumindest zum Teil in Salzform vorliegen können, als auch derivatisierte Carboxylgruppen, insbesondere Ester, Amide und Imide der Carboxylgruppen aufweisen. Demnach umfassen diese Copolymere vorzugsweise Monomereinheiten (ii) der Formel (VIIq1) und der Formel (VIIq2), worin M und R die oben angegebenen Bedeutungen besitzen. Insbesondere gehören hierzu diejenigen Copolymere, deren Verhältnis von Monomereinheiten der Formel (VIIq1):(VIIq2) etwa 5:95 bis 95:5, vorzugsweise etwa 20:80 bis 80:20 und besonders bevorzugt etwa 40:60 bis 60:40 beträgt. In diesem Zusammenhang sind vor allem Reste R der Formel (I) und insbesondere der Formel (Ia) und ferner auch die oben beschriebenen substituierten oder unsubstituierten C_{1-C40}-Alkylamine und Di-(C₁-C₄₀-Alkyl)amine zu nennen. Einem weiteren Aspekt zufolge umfassen diese Copolymere insbesondere Monomereinheiten (i) der Formel (VIIp), worin R²¹ und R²² obige Bedeutungen besitzen. Insbesondere bevorzugt sind hiervon Diisobuten, C₁₈-Olefine und C₂₀-C₂₄-olefine.

Anteile der Komponente (b) am Gesamtgewicht des Mittels von mehr als 0,5 Gew.-%, vorzugsweise von mehr als 1 Gew.-% und insbesondere von mehr als 5 Gew.-% sind von Vorteil. Andererseits sind Anteile der Komponente (b) am Gesamtgewicht des Mittels von weniger als 50 Gew.-%, vorzugsweise von weniger als 25 Gew.-% und insbesondere von weniger als 10 Gew.-% in der Regel zweckmäßig.

Der Wirkstoff (Komponente (a)) kann insbesondere ausgewählt sein unter Herbiziden, Fungiziden, Insektiziden, Akariziden, Nematiziden, sowie Wirkstoffen, die das Pflanzenwachstum regulieren.

Herbizide Pflanzenschutzmittel können einen oder mehrere beispielsweise der folgenden herbiziden Pflanzenschutzwirkstoffe enthalten:
1,3,4-Thiadiazole wie Buthidazole und Cyprazole, Amide wie Allidochlor, Benzoylpropethyl, Bromobutide, Chlorthiamid, Dimepiperate, Dimethenamid, Diphenamid, Etobenzanid, Flampropmethyl, Fosamin, Isoxaben, Monalide, Naptalame, Pronamid, Propanil, Aminophosphorsäuren wie Bilanafos, Buminafos, Glufosinateammonium, Glyphosate, Sulfosate, Aminotriazole wie Amitrol, Anilide wie Anilofos, Mefenacet, Aryloxyalkansäuren wie 2,4-D, 2,4-DB, Clomeprop, Dichlorprop, Dichlorprop-P, Dichlorprop-P, Fenoprop, Fluroxypyr, MCPA, MCPB, Mecoprop, Mecoprop-P, Napropamide, Napropanilide, Triclopyr, Benzoesäuren wie Chloramben, Dicamba, Benzothiadiazinone wie Bentazon, Bleacher wie Clomazone, Diflufenican, Fluorochloridone, Flupoxam, Fluridone, Pyrazolate, Sulcotrione, Carbamate wie Carbetamid, Chlorbufam, Chlorpropham, Desmedipham, Phenmedipham, Vernolate, Chinolincarbonsäuren wie Quinclorac, Quinmerac, Dichlorpropionsäuren wie Dalapon, Dihydrobenzofurane wie Ethofumesate, Dihydrofuran-3-one wie Flurtamone, Dinitroaniline wie Benefin, Butralin, Dinitramin, Ethalfluralin, Fluchloralin, Isopropalin, Nitralin, Oryzalin, Pendimethalin, Prodiamine, Profluralin, Trifluralin, Dinitrophenole wie Bromofenoxim, Dinoseb, Dinoseb-acetat, Dinoterb, DNOC, Minoterb-Acetat, Diphenylether wie Acifluorfen-sodium, Aclonifen, Bifenox, Chlornitrofen, Difenoxuron, ethoxyfen, Fluorodifen, Fluoroglycofen-ethyl, Fomesafen, Furyloxyfen, Lactofen, Nitrofen, Nitrofluorfen, Oxyfluorfen, Dipyridyle wie Cyperquat, Difenzoquat-methylsulfat, Diquat, Paraquat-dichlorid, Imidazole wie Isocarbamid, Imidazolinone wie Imazamethapyr, Imazapyr, Imazaquin, Imazethabenz-methyl, Imazethapyr, Oxadiazole wie Methazole, Oxadiargyl, Oxadiazon, Oxirane wie Tridiphane, Phenole wie Bromoxynil, Ioxynil, Phenoxyphenoxypropionsäureester wie Clodinafop, Cyhalofop-butyl, Diclofop-methyl, Fenoxaprop-ethyl, Fenoxaprop-p-ethyl, Fenthiapropethyl, Fluazifop-butyl, Fluazifop-p-butyl, Haloxyfop-ethoxyethyl, Haloxyfop-methyl, Haloxyfop-p-methyl, Isoxapyrifop, Propaquizafop, Quizalofop-ethyl, Quizalofop-p-ethyl, Quizalofop-tefuryl, Phenylessigsäuren wie Chlorfenac, Phenylpropionsäuren wie Chlorophenprop-methyl, ppi-Wirkstoffe wie Benzofenap, Flumiclorac-pentyl, Flumioxazin, Flumipropyn, Flupropacil, Pyrazoxyfen, Sulfentrazone, Thidiazimin, Pyrazole wie Nipyraclofen, Pyridazine wie Chloridazon, Maleic hydrazide, Norflurazon, Pyridate, Pyridincarbonsäuren wie Clopyralid, Dithiopyr, Picloram, Thiazopyr, Pyrimidylether wie Pyrithiobacsäure, Pyrithiobac-sodium, KIH-2023, KIH-6127, Sulfonamide wie Flumetsulam, Metosulam, Triazolcarboxamide wie Triazofenamid, Uracile wie Bromacil, Lenacil, Terbacil, ferner Benazolin, Benfuresate, Bensulide, Benzofluor, Butamifos, Cafenstrole, Chlorthal-dimethyl, Cinmethylin, Dichlobenil, Endothall, Fluorbentranil, Mefluidide, Perfluidone, Piperophos.

Bevorzugte herbizide Pflanzenschutz-Wirkstoffe sind solche vom Sulfonylharnstoff-Typ wie Amidosulfuron, Azimsulfuron, Bensulfuron-methyl, Chlorimuron-ethyl, Chlorsulfuron, Cinosulfuron, Cyclosulfamuron, Ethametsulfuron-methyl, Flazasulfuron, Halosulfuron-methyl, Imazosulfuron, Metsulfuron-methyl, Nicosulfuron, Primisulfuron, Prosulfuron, Pyrazosulfuron-ethyl, Rimsulfuron, Sulfometuron-methyl, Thifensulfuron-methyl, Triasulfuron, Tribenuron-methyl, Triflusulfuron-methyl, Tritosulfuron.

Weiterhin bevorzugte herbizide Pflanzenschutz-Wirkstoffe sind solche vom Cyclohexenon-Typ wie Alloxydim, Clethodim, Cloproxydim, Cycloxydim, Sethoxydim und Tralkoxydim.

Ganz besonders bevorzugte herbizide Wirkstoffe vom Cyclohexenon-Typ sind: Tepraloxydim (vgl. AGROW, Nr. 243, 3.11.95, Seite 21, Caloxydim) und 2-(1-[2-{4-Chlorphenoxy}propyloxyimino]butyl)-3-hydroxy-5-(2H-tetrahydrothiopyran-3-yl)-2-cyclohexen-1-on und vom Sulfonylharnstoff-Typ: N-(((4-methoxy-6-[trifluormethyl]-1,3,5-triazin-2-yl)amino)carbonyl)-2-(trifluormethyl)-benzolsulfonamid.

Die fungiziden Mittel enthalten einen oder mehrere beispielsweise der folgenden fungiziden Wirkstoffe: Schwefel, Dithiocarbamate und deren Derivate, wie Ferridimethyl-dithiocarbamat, Zinkdimethyldithiocarbamat, Zinkethylenbisdithiocarbamat, Manganethylenbisdithiocarbamat, Mangan-Zink-ethylendiamin-bis-dithiocarbamat, Tetramethyl-thiuramdisulfide, Ammoniak-Komplex von Zink-(N,N-ethylen-bis-dithiocarbamat), Ammoniak-Komplex von Zink-(N,N'-propylen-bis-dithiocarbamat), Zink-(N,N'-propylenbis-dithiocarbamat), N,N'-Polypropylen-bis-(thiocarba-moyl)disulfid;

Nitroderivate, wie Dinitro-(1-methylheptyl)-phenylcrotonat, 2-sec-Butyl-4,6-dinitrophenyl-3,3-dimethylacrylat, 2-sec-Butyl-4,6-dinitrophenyl-isopropylcarbonat, 5-Nitro-isophthalsäure-di-isopropylester;

heterocyclische Substanzen, wie 2-Heptadecyl-2-imidazolin-acetat, 2,4-Dichlor-6-(o-chloranilino)-s-triazin, O,O-Diethyl-phthal-imidophosphonothioat, 5-Amino-1-[bis-(dimethylamino)-phosphinyl]-3-phenyl-1,2,4-triazol, 2,3-Dicyano-1,4-dithioanthrachinon, 2-Thio-1,3-dithiolo[4,5-b]chinoxalin, 1-(Butylcarbamoyl)-2-benz-imidazol-carbaminsäuremethylester, 2-Methoxycarbonylamino-benz-imidazol, 2-(Furyl-(2))-benzimidazol, 2-(Thiazolyl-(4)-benzimidazol, N-(1,1,2,2-Tetrachlorethylthio)-tetrahydrophthalimid, N-Trichlormethylthio-tetrahydrophthalimid, N-Trichlormethylthio-phthalimid,

N-Dichlorfluormethylthio-N',N'-dimethyl-N-phenyl-schwefelsäurediamid, 5-Ethoxy-3-trichlormethyl-1,2,3-thiadiazol, 2-Rhodan-methylthiobenzthiazol, 1,4-Dichlor-2,5-dimethoxybenzol, 4-(2-Chlorphenylhydrazono)-3-methyl-5-isoxazolon, Pyridin-2-thio-1-oxid, 8-Hydroxychinolin bzw. dessen Kupfersalz, 2,3-Dihydro-5-carboxanilido-6-methyl-1,4-oxathiin, 2,3-Dihydro-5-carboxani-lido-6-methyl-1,4-oxathiin-4,4-dioxid, 2-Methyl-5,6-dihydro-4H-pyran-3-carbonsäure-anilid, 2-Methyl-furan-3-carbonsäureanilid, 2,5-Dimethyl-furan-3-carbonsäureanilid, 2,4,5-Trimethyl-furan-3-carbonsäureanilid, 2,5-Dimethyl-furan-3-carbonsäurecyclohexyl-amid, N-Cyclohexyl-N-methoxy-2,5-dimethyl-furan-3-carbonsäure-amid, 2-Methyl-benzoesäure-anilid, 2-Iod-benzoesäure-anilid, N-Formyl-N-morpholin-2,2,2-trichlorethylacetal, Piperazin-1,4-di-ylbis-(1-(2,2,2-trichlor-ethyl)-formamid, 1-(3,4-Dichloranilino)-1-formylamino-2,2,2-trichlorethan, 2,6-Dimethyl-N-tridecylmor-pholin bzw. dessen Salze, 2,6-Dimethyl-N-cyclododecyl-morpholin bzw. dessen Salze, N-[3-(p-tert.-Butylphenyl)-2-methylpropyl]-cis-2,6-dimethylmorpholin, N-[3-(p-tert.-Butylphenyl)-2-methyl-propyl]-piperidin, 1-[2-(2,4-Dichlorphenyl)-4-ethyl-1,3-dioxolan-2-yl-ethyl]-1H-1,2,4-triazol, 1-[2-(2,4-Dichlorphenyl)-4-n-propyl-1,3-dioxolan-2-yl-ethyl]-1H-1 ,2,4-triazol, N-(n-Propyl)-N-(2,4,6-trichlorphenoxyethyl)-N'-imidazol-yl-harnstoff, 1-(4-Chlorphenoxy)-3,3-dimethyl-1-(1H-1,2,4-triazol-1-yl)-2-butanon, 1-(4-Chlorphenoxy)-3,3-dimethyl-1-(1H-1,2,4-triazol-1-yl)-2-butanol, (2RS,3RS)-1-[3-(2-Chlorphenyl)-2-(4-fluorphenyl)-oxiran-2-yl-methyl]-1H-1,2,4-triazol, α-(2-Chlorphenyl)-α-(4-chlorphenyl)-5-pyrimidin-methanol, 5-Butyl-2-dimethylamino-4-hydroxy-6-methyl-pyrimidin, Bis-(p-chlorphenyl)-3-pyridinmethanol, 1,2-Bis-(3-ethoxycarbonyl-2-thioureido)-benzol, 1,2-Bis-(3-methoxycarbonyl-2-thioureido)-benzol,

Strobilurine wie Methyl-E-methoxyimino-[α-(o-tolyloxy)-o-tolyl]-acetat, Methyl-E-2-{2-[6-(2-cyanophenoxy)-pyrimidin-4-yloxy]-phe-nyl}-3-methoxyacrylat, Methyl-E-methoxyimino-[α-(2-phenoxyphenyl)]-acetamid, Methyl-E-methoxyimino-[α-(2,5-dimethylphenoxy)-o-tolyl]-acetamid,

Anilinopyrimidine wie N-(4,6-Dimethylpyrimidin-2-yl)-anilin, N-[4-Methyl-6-(1-propinyl)-pyrimidin-2-yl]-anilin, N-[4-Methyl-6-cyclopropyl-pyrimidin-2-yl]-anilin,

Phenylpyrrole wie 4-(2,2-Difluor-1,3-benzodioxol-4-yl)-pyrrol-3-carbonitril, Zimtsäureamide wie 3-(4-Chlorphenyl)-3-(3,4-dimethoxyphenyl)-acrylsäuremorpholid,
sowie verschiedene Fungizide, wie Dodecylguanidinacetat, 3-[3-(3,5-Dimethyl-2-oxycyclohexyl)-2-hydroxyethyl]-glutarimid, Hexa-chlorbenzol, DL-Methyl-N-(2,6-dimethyl-phenyl)-N-furoyl(2)-ala-ninat, DL-N-(2,6-Dimethyl-phenyl)-N-(2'-methoxyacetyl)-alanin-methylester, N-(2,6-Dimethylphenyl)-N-chloracetyl-D,L-2-amino-butyrolacton, DL-N-(2,6-Dimethylphenyl)-N-(phenylacetyl)-alanin-methylester, 5-Methyl-5-vinyl-3-(3,5-dichlorphenyl)-2,4-dioxo-1,3-oxazolidin, 3-[3,5-Dichlorphenyl(-5-methyl-5-methoxymethyl]-1,3-oxazolidin-2,4-dion, 3-(3,5-Dichlorphenyl)-1-isopropylcarba-moylhydantoin, N-(3,5-Dichlorphenyl)-1,2-dimethylcyclopropan-1,2-dicarbonsäureimid, 2-Cyano-[N-(ethylaminocarbonyl)-2-meth-oximino]-acetamid, 1-[2-(2,4-Dichlorphenyl)-pentyl]-1H-1,2,4-triazol, 2,4-Difluor-α-(1H-1,2,4-triazolyl-1-methyl)-benzhydryl-alkohol, N-(3-Chlor-2,6-dinitro-4-trifluormethyl-phenyl)-5-tri-fluormethyl-3-chlor-2-aminopyridin, 1-((bis-(4-Fluorphenyl)-methylsilyl)-methyl)-1H-1,2,4-triazol.

Brauchbare Wachstumsregulatoren sind z.B. die Gruppe der Gibberelline. Dazu gehören z.B. die Gibberelline GA₁, GA₃, GA₄, GA₅ und GA₇ etc. und die entsprechenden exo-16, 17-Dihydrogibberelline sowie die Derivate davon, z.B. die Ester mit C₁-C₄-Carbonsäuren. Erfindungsgemäß bevorzugt ist das exo-16,17-Dihydro-GA₅-13-acetat.

Gemäß einer Ausführungsform der vorliegenden Erfindung besteht die Wirkstoffkomponente (a) im Wesentlichen aus einem oder mehreren der folgenden bevorzugten Wirkstoffe: Bentazon, Difenzoquat, Pendimethalin, Quinclorac, Cycloxydim, Quinmerac, Sethoxydim, Cinidon-ethyl, Mecoprop, Mecoprop-P, Dichlorprop, Chloridazon, Dicamba, Metobromuron, Profoxydim, Tritosulfuron, Diflufenzopyr, s-Dimethenamid, Cyanazine, Picolinafen, Cyclosulfamuron, Imazamethabenz-methyl, Imazaquin, Acifluorfen, Nicosulfuron, Sulfur, Dithianon, Tridemorph, Metiram, Nitrothal-Isopropyl, Thiophhanate-Methyl, Metholachlor, Triforine, Cerbendazim, Vinclozolin, Dodine, Fenpropimorph, Epoxiconazole, Kresoxim-methyl, Pyraclostrobin, Dimoxystrobin, Cyazofamid, Fenoxalin, Dimethomorph, Metconazole, Dimethoate, Chlorfenvinphos, Phorate, Fenbutatin oxide, Chrorfenapyr, Simazine, Bensulforon, Flufenoxuron, Terflubenzuron, Alphacypermetrin, Cypermethrin, Hydramehylnon, Terbufos, Temephos, Halofenozide, Flocoumafen, Triazamate, Flucythrinate, Hexythiazox, Dazomet, Chlorocholinchlorid, Mepiquatchlorid, Prohexadion-Ca, bzw. aus einem oder mehreren der folgenden ganz bevorzugten Wirkstoffe: Metazachlor, Paraquat, Glyphosat, Imazethaphyr, Tepraloxydim, Imazapic, Imazamox, Acetochlor, Atrazine, Tebufenpyrad, Trifluralin, Pyridaben.

Die vorliegende Erfindung betrifft insbesondere Mittel mit hohen Wirkstoffanteilen (Konzentrate). So macht der Anteil der Komponente (a) am Gesamtgewicht des Mittels in der Regel mehr als 10 Gew.-%, vorzugsweise mehr als 20 Gew.-% und insbesondere mehr als 25 Gew.-% aus. Andererseits liegt der Anteil der Komponente (a) am Gesamtgewicht des Mittels zweckmäßigerweise in der Regel bei weniger als 70 Gew.-%, vorzugsweise bei weniger als 60 Gew.-% und insbesondere bei weniger als 50 Gew.-%.

Die erfindungsgemäßen Formulierungen können im übrigen übliche Hilfs- und/oder Zusatzstoffe für die Herstellung von Formulierungen auf dem Gebiet des Pflanzenschutzes enthalten. Dazu gehören beispielsweise Tenside, Dispergierhilfsmittel, Netzmittel, Verdickungsmittel, organische Lösungsmittel, Cosolventien, Entschäumer, Carbonsäuren, Konservierungsmittel, Stabilisierungsmittel, etc.

Gemäß einer besonderen Ausführungsform der vorliegenden Erfindung umfassen die Mittel als oberflächenaktive Komponente (c) wenigstens ein (weiteres) Tensid. Der Begriff "Tensid" bezeichnet hier grenzflächenaktive bzw. oberflächenaktive Mittel.

Die Komponente (c) wird insbesondere als Dispergator bzw. Emulgator, vor allem zum Dispergieren eines Feststoffanteils in Suspensionskonzentraten, zugesetzt. Ferner können Teile der Komponente (c) als Netzmittel dienen.

Prinzipiell brauchbar sind anionische, kationische, nichtionische und amphotere Tenside, wobei Polymer-Tenside sowie Tenside mit Heteroatomen in der hydrophoben Gruppe eingeschlossen sind.

Zu den anionischen Tensiden gehören beispielsweise Carboxylate, insbesondere Alkali-, Erdalkali- und Ammoniumsalze von Fettsäuren, z.B. Kaliumstearat, die üblicherweise auch als Seifen bezeichnet werden; Acylglutamate; Sarkosinate, z.B. Natriumlauroylsarkosinat; Taurate; Methylcellulosen; Alkylphosphate, insbesondere Mono- und Diphosphorsäurealkylester; Sulfate, insbesondere Alkylsulfate und Alkylethersulfate; Sulfonate, weitere Alkyl- und Alkylarylsulfonate, insbesondere Alkali-, Erdalkali- und Ammoniumsalze von Arylsulfonsäuren sowie alkylsubstituierten Arylsulfonsäuren, Alkylbenzolsulfonsäuren, wie beispielsweise Lignin- und Phenolsulfonsäure, Naphthalin- und Dibutylnaphthalinsulfonsäuren, oder Dodecylbenzolsulfonate, Alkylnaphthalinsulfonate, Alkylmethylestersulfonate, Kondensationsprodukte von sulfoniertem Naphthalin und Derivaten davon mit Formaldehyd, Kondensationsprodukte von Naphthalinsulfonsäuren, Phenol- und/oder Phenolsulfonsäuren mit Formaldehyd oder mit Formaldehyl und Harnstoff, Mono- oder Dialkyl-bernsteinsäureestersulfonate; sowie Eiweißhydrolysate und Lignin-Sulfitablaugen. Die zuvor genannten Sulfonsäuren werden vorteilhafterweise in Form ihrer neutralen oder gegebenenfalls basischen Salze verwendet.

Zu den kationischen Tensiden gehören beispielsweise quaternierte Ammoniumverbindungen, insbesondere Alkyltrimethylammonium- und Dialkyldimethylammonium-Halogenide und -alkylsulfate sowie Pyridin- und Imidazolin-Derivate, insbesondere Alkylpyridinium-Halogenide.

Zu den nichtionischen Tensiden gehören beispielsweise die Alkoxylate und vor allem Ethoxylate sowie nichtionische Tenside, insbesondere
- Fettalkohol-polyoxyethylen-ester, beispielsweise Laurylalkohol-polyoxyethylenetheracetat,
- Alkyl-Polyoxyethylen- und -polyoxypropylen-ether, z.B. von iso-Tridecylalkohol und Fettalkohol-Polyoxy-ethylenether, Alkylarylalkohol-Polyoxyethylenether, z.B. Octylphenol-Polyoxyethylenether,
- alkoxylierte tierische und/oder pflanzliche Fette und/oder Öle, beispielsweise Maisölethoxylate, Rizinusölethoxylate, Talgfettethoxylate,
- Glycerinester, wie beispielsweise Glycerinmonostearat,
- Fettalkoholalkoxylate und Oxoalkoholalkoxylate, insbesondere vom Typ RO-(R₁₈O)ᵣ(R₁₉O)ₛR₂₀ mit R₁₈ und R₁₉ unabhängig voneinander = C₂H₄, C₃H₆, C₄H₉ und R₂₀ = H, oder C₁-C₁₂-Alkyl, R = C₃-C₃₀-Alkyl oder C₆-C₃₀-Alkenyl, r und s unabhängig voneinander 0 bis 50, wobei nicht beide für 0 stehen können, wie iso-Tridecylalkohol und Oleylalkohol-polyoxyethylenether,
- Alkylphenolalkoxylate, wie beispielsweise ethoxyliertes isoOctyl-, Octyl- oder Nonyl-phenol, Tributylphenol-polyoxyethylenether,
- Fettaminalkoxylate, Fettsäureamid- und Fettsäurediethanolamidalkoxylate, insbesondere deren Ethoxylate,
- Zuckertenside, Sorbitester, wie beispielsweise Sorbitanfettsäureester (Sorbitanmonooleat, Sorbitantristearat), Polyoxyethylensorbitanfettsäureester, Alkylpolyglycoside, N-Alkylgluconamide,
- Alkylmethylsulfoxide,
- Alkyldimethylphosphinoxide, wie beispielsweise Tetradecyldimethylphosphinoxid.

Zu den amphoteren Tensiden gehören beispielsweise Sulfobetaine, Carboxybetaine und Alkyldimethylaminoxide, z.B. Tetradecyldimethylaminoxid.

Zu den polymeren Tensiden gehören beispielsweise Di-, Tri- und Multiblockpolymere vom Typ (AB)ₓ, ABA und BAB, z.B. gegebenenfalls Endgruppen-verschlossene Ethylenoxid/Propylenoxid-Blockcopolymere, z.B. Ethylendiamin-EO/PO-Blockcopolymere, Polystyrol-Block-Polyethylenoxid, und AB-Kammpolymere, z.B. Polymethacrylat-comb-Polyethylenoxid.

Weitere Tenside, die hier beispielhaft genannt werden sollen, sind Perfluortenside, Silikontenside, z. B. Polyether-modifizierte Siloxane, Phospholipide, wie beispielsweise Lecithin oder chemisch modifizierte Lecithine, Aminosäuretenside, z.B. N-Lauroylglutamat und oberflächenaktive Homo- und Copolymere, z.B. Polyvinylpyrrolidon, Polyacrylsäuren in Form ihrer Salze, Polyvinylalkohol, Polypropylenoxid, Polyethylenoxid, Maleinsäureanhydrid-Isobuten-Copolymere und Vinylpyrrolidon-Vinylacetat-Copolymere.

Sofern nicht spezifiziert, handelt es sich bei den Alkylketten der oben aufgeführten Tenside um lineare oder verzweigte Reste mit üblicherweise 8 bis 20 Kohlenstoffatomen.

Vorzugsweise ist das weitere Tensid im Rahmen der Komponente (c) ausgewählt unter nichtionischen Tensiden. Hiervon sind insbesondere diejenigen bevorzugt, die HLB-Werte im Bereich von 2 bis 13, vorzugsweise im Bereich von 5 bis 13, und insbesondere im Bereich von 8 bis 13 besitzen.

Der Anteil der Komponente (c) am Gesamtgewicht des Mittels beträgt - sofern vorhanden - in der Regel weniger als 50 Gew.-%, vorzugsweise weniger als 15 Gew.-% und insbesondere weniger als 5 Gew.-%.

Gemäß einer besonderen Ausführungsform der vorliegenden Erfindung umfassen die Mittel als Komponente (d) mindestens einen weiteren Hilfsstoff.

Die Komponente (d) kann vielerlei Zwecke erfüllen. Die Wahl geeigneter Hilfsstoffe erfolgt den Anforderungen entsprechend in üblicher Weise durch den Fachmann.

Beispielsweise sind weitere Hilfsstoffe ausgewählt unter
(d1) Lösungs- oder Verdünnungsmitteln;
(d2) Emulgatoren, Retentionsmitteln, pH-Puffern, Anti-Schaumstoffen.

Neben Wasser können die Mittel weitere Lösungsmittel löslicher Bestandteile bzw. Verdünnungsmittel unlöslicher Bestandteile des Mittels umfasssen.

Prinzipiell brauchbar sind beispielsweise Mineralöle, synthetische Öle sowie pflanzliche und tierische Öle, niedermolekulare hydrophile Lösungsmittel wie Alkohle, Ether, Ketone und ähnliches.

Einerseits sind daher aprotische bzw. apolare Lösungs- bzw. Verdünnungsmittel zu nennen, wie Mineralölfraktionen von mittlerem bis hohem Siedepunkt, z.B. Kerosin und Dieselöl, ferner Kohlenteeröle, Kohlenwasserstoffe, Paraffinöle, z.B. C₈- bis C₃₀-Kohlenwasserstoffe der n- oder iso-Alkan-Reihe oder Gemische davon, gegebenenfalls hydrierte oder teilhydrierte Aromaten oder Alkylaromaten aus der Benzol- oder Naphthalin-Reihe, z.B. aromatische oder cycloaliphatische C₇- bis C₁₈-Kohlenwasserstoffverbindungen, aliphatische oder aromatische Carbonsäure- oder Dicarbonsäureester, Fette oder Öle pflanzlichen oder tierischen Ursprungs, wie Mono-, Di- und Triglyceride, in Reinform oder als Gemisch beispielsweise in Form öliger Naturstoffextrakte, z.B. Olivenöl, Sojaöl, Sonnenblumenöl, Castoröl, Sesamöl, Maisöl, Erdnussöl, Rapsöl, Leinsamenöl, Mandelöl, Rizinusöl, Safloröl, sowie deren Raffinate, z.B. hydrierte oder teilhydrierte Produkte davon und/oder deren Ester, insbesondere Methyl- und Ethylester.

Beispiele für C₈- bis C₃₀-Kohlenwasserstoffe der n- oder iso-Alkan-Reihe sind n- und iso-Octan, -Decan, -Hexadecan, -Octadecan, -Eicosan, und vorzugsweise Kohlenwasserstoffgemische, wie Paraffinöl (das in technischer Qualität bis zu etwa 5% Aromaten enthalten kann) und ein C₁₈-C₂₄-Gemisch, das unter der Bezeichnung Spraytex-Öl im Handel von der Fa. Texaco erhältlich ist.

Zu den aromatischen oder cycloaliphatischen C₇- bis C₁₈-Kohlenwasserstoffverbindungen gehören insbesondere aromatische oder cycloaliphatische Lösungsmittel aus der Alkyl-Aromatenreihe. Diese Verbindungen können unhydriert, teilhydriert oder vollständig hydriert sein. Zu derartigen Lösungsmitteln gehören insbesondere Mono-, Di- oder Trialkylbenzole, Mono-, Di-, Trialkyl-substituierte Tetraline und/oder Mono-, Di-, Tri- oder Tetraalkyl-substituierte Naphthaline (Alkyl steht vorzugsweise für C₁-C₆-Alkyl). Beispiele derartiger Lösungsmittel sind Toluol, o-, m-, p-Xylol, Ethylbenzol, Isopropylbenzol, tert.-Butylbenzol und Gemische, wie die unter der Bezeichnung Shellsol und Solvesso vertriebenen Produkte der Fa. Exxon, z.B. Solvesso 100, 150 und 200.

Beispiele für geeignete Monocarbonsäureester sind Ölsäureester, insbesondere Methyloleat und Ethyloleat, Laurinsäureester, insbesondere 2-Ethylhexyllaurat, Octyllaurat und Isopropyllaurat, Isopropylmyristat, Palmitinsäureester, insbesondere 2-Ethylhexylpalmitat und Isopropylpalmitat, Stearinsäureester, insbesondere Stearinsäure-n-butylester und 2-Ethylhexansäure-2-ethylhexyl-ester.

Beispiele für geeignete Dicarbonsäureester sind Adipinsäureester, insbesondere Dimethyladipat, Di-n-butyladipat, Di-n-octyladipat, Di-iso-octyladipat, auch als Bis-(2-ethylhexyl)adipat bezeichnet, Di-n-nonyladipat, Di-iso-nonyladipat und Ditridecyladipat; Bernsteinsäureester, insbesondere Di-n-octylsuccinat und Di-iso-octylsuccinat, und Di-(iso-nonyl)cyclohexan-1,2-dicarboxylat.

Der Anteil der zuvor beschriebenen aprotischen Lösungs- bzw. Verdünnungsmitteln am Gesamtgewicht des Mittels beträgt in der Regel weniger als 80 Gew.-%, vorzugsweise weniger als 50 Gew.-% und insbesondere weniger als 30 Gew.-%.

Einige dieser aprotischen Lösungs- bzw Verdünnungsmittel können ebenfalls adjuvante, d.h. insbesondere wirkungsfördernde Eigenschaften, haben. Dies gilt insbesondere für besagte Mono- und Dicarbonsäureester. Unter diesem Aspekt können derartige Adjuvantien auch als Teil einer weiteren Formulierung (stand alone-Produkt) mit den erfindungsgemäßen Copolymeren bzw. diese enthaltenden Mitteln zu einem zweckmäßigen Zeitpunkt, in der Regel kurz vor der Applikation, vermischt werden.

Andererseits sind protische bzw. polare Lösungs- bzw. Verdünnungsmittel zu nennen, z.B. C₂-C₈-Monoalkohole wie Ethanol, Propanol, Isopropanol, Butanol, Isobutanol, tert-Butanol, Cyclohexanol und 2-Ethylhexanol, C₃-C₈-Ketone wie Diethylketon, t-Butylmethylketon und Cyclohexanon, sowie aprotische Amine, wie N-Methyl- und N-Octylpyrrolidon.

Der Anteil der zuvor beschriebenen protischen bzw. polaren Lösungs- bzw. Verdünnungsmitteln am Gesamtgewicht des Mittels beträgt in der Regel weniger als 80 Gew.-%, vorzugsweise weniger als 50 Gew.-% und insbesondere weniger als 30 Gew.-%.

Auch Antiabsetzmittel können insbesondere für Suspensionskonzentrate verwendet werden. Diese dienen vor allem zur rheologischen Stabilisierung. Insbesondere sind in diesem Zusammenhang mineralische Produkte, z.B. Bentonite, Talcite und Herktorite, zu nennen.

Weitere gegebenenfalls brauchbare Zusätze sind z.B. unter Mineralsalzlösungen, welche zur Behebung von Ernährungs- und Spurenelementmängeln eingesetzt werden, nichtphytotoxischen Ölen und Ölkonzentraten, Antidriftreagenzien, Antischaummitteln, insbesondere solchen vom Silicon-Typ, beispielsweise das von der Firma Wacker vertriebene Silicon SL, und ähnlichem zu finden.

Die Formulierungen können als emulgierbares Konzentrat (EC), Suspoemulsion (SE), Öl-in-Wasser-Emulsion (O/W), Wasser-in-Öl-Emulsion (W/O), wässriges Suspensionskonzentrat, Öl-Suspensionskonzentrat (SC), Mikroemulsion (ME), etc. vorliegen.

Die Herstellung der Mittel kann in an sich bekannter Weise erfolgen. Dazu werden zumindest Teile der Komponenten zusammengegeben. Hierbei ist zu beachten, daß Produkte, insbesondere handelsübliche Produkte, verwendet werden können, deren Bestandteile zu unterschiedlichen Komponenten beitragen können. Beispielsweise kann ein bestimmtes Tensid in einem aprotischen Lösungmittel gelöst sein, so daß dieses Produkt zu verschiedenen Komponenten beitragen kann. Ferner können unter Umständen auch geringe Anteile an weniger erwünschten Substanzen mit handelsüblichen Produkten eingebracht werden. Als Gemisch sind die zusammengegebenen Produkte dann in der Regel intensiv miteinander zu einem homogenen Gemisch zu vermengen und erforderlichenfalls - z.B. im Falle von Suspensionen, zu vermahlen.

Das Vermengen kann in an sich bekannter Weise erfolgen, z.B. durch Homogenisieren mit geeigneten Vorrichtungen wie KPG- oder Magnetrührern.

Auch das Vermahlen ist ein an sich bekannter Vorgang. Als Mahlkörper kann man Glasmahlkörper oder andere mineralische oder metallische Mahlkörper, in der Regel in einer Größe von 0,1-30 mm und insbesondere von 0,6-2 mm verwenden. Man zerkleinert das Gemisch in der Regel solange, bis die gewünschte Partikelgröße erreicht ist.

Allgemein kann die Vermahlung in Kreisfahrweise, d.h. laufendes Umpumpen beispielsweise eines SCs im Kreis, oder mittels Passagenfahrweise, d.h. komplettes und wiederholtes Durchpumpen beziehungsweise Durchfahren eines Ansatzes, durchgeführt werden.

Die Vermahlung kann mit herkömmlichen Kugel-, Perl- oder Rührwerksmühlen erfolgen, z.B. in einer Dynomühle (Fa. Bachofen), mit Ansatzgrößen von beispielsweise 0,5 bis zu 1 Liter in sogenannter Passagenfahrweise. Nach mehreren - insbesondere 4 bis 6 - Passagen (Durchpumpen der Aufschlämmung durch die Mühle mit Hilfe einer Schlauchpumpe) werden dabei nach mikroskopischer Auswertung mittlere Partikelgrößen von 0,5 bis 10 µm erreicht.

Die Mittel werden vor Gebrauch in der Regel durch Verdünnen in üblicher Weise in eine zur Anwendung brauchbare Form überführt. Bevorzugt ist das Verdünnen mit Wasser oder auch aprotischen Lösungsmitteln, beispielsweise im Tankmixverfahren. Die Verwendung in Form einer Spritzbrühen-Zubereitung ist bevorzugt. Appliziert werden kann im Vorauflauf- oder Nachauflaufverfahren. Besondere Vorteile ergeben sich im Nachauflaufverfahren.

Vor allem bei der Sprühbehandlung ergeben sich besondere Vorteile. Für eine übliche Tankmix-Spritzbrühe werden pro ha etwa 0,01 bis 10, vorzugsweise etwa 0,5 bis 5 und insbesondere 0,5 bis 2 kg des erfindungsgemäßen Mittels mit Wasser auf 5 bis 1500 1 und insbesondere 50 bis 1000 1 verdünnt. Der Tankmix-Spritzbrühe werden gegebenenfalls 0,5 Gew.-% bis 50 Gew.-% (bezogen auf Spritzbrühe) an (weiteren) anionischen, kationischen oder nichtionischen Tensiden, Hilfsmitteln, Polymeren und/oder den vorstehend genannten Wirkstoffen zugesetzt. Beispielhafte Stoffe für derartige Tenside und weitere Hilfsmittel sind vorstehend bereits beschrieben. Insbesondere sind Stärke und Stärkederivate, z.B. eine Carboxyl- und Sulfonsäuregruppen enthaltende Stärke (Nu-Film der Union Carbide Corp.) sowie Spreitmittel und Extender, wie Vapor Guard der Miller Chemical & Fertilizer Corp., zu nennen.

Mit Blick auf die Verwendung als Adjuvans werden die bereits ein erfindungsgmäßes Copolymer enthaltenden Mittel - oder weitere Pflanzenbehandlungsmittel unter Zusatz eines erfindungsgmäßen Copolymers als "stand-alone-Produkt" - so mit Wasser verdünnt, dass pro ha etwa 0,01 bis 10, vorzugsweise etwa 0,05 bis 5 und insbesondere etwa 0,1 bis 1 kg wenigstens eines erfindungsgmäßen Copolymers appliziert werden.

Im Rahmen der vorliegenden Beschreibung umfassen Begriffe wie Alkyl, Alkoxy, etc. geradkettige oder verzweigte Kohlenwasserstoffgruppen, wie Methyl, Ethyl, n-Propyl, i-Propyl, n-Butyl, i-Butyl, sek-Butyl, t-Butyl, n-Pentyl, n-Hexyl, n-Octyl, 2-Ethylhexyl, n-Nonyl, iso-Nonyl, n-Decyl, iso-Decyl, n-Undecyl, iso-Undecyl, n-Dodecyl, iso-Dodecyl, n-Tridecyl, iso-Tridecyl, Stearyl, n-Eicosyl, vorzugsweise mit - soweit nichts anderes angegeben ist - 1 bis 8, insbesondere 1 bis 6 und besonders bevorzugt 1 bis 4 Kohlenstoffatomen für kurzkettige Reste und 6 bis 40, insbesondere 8 bis 24 und besonders bevorzugt 12 bis 24 Kohlenstoffatomen für langkettige Reste.

Der Begriff "Cycloalkyl" umfasst mono- oder bicyclische, gegebenenfalls ein-, zwei oder dreifach mit C₁-C₄-Alkyl substituierte, gesättigte Kohlenwasserstoffgruppen, wie Cyclopropyl, Cyclobutyl, Cyclopentyl und vor allem Cyclohexyl, etc., vorzugsweise mit - soweit nichts anderes angegeben ist - 3 bis 10, insbesondere 3 bis 6 und besonders bevorzugt 6 Kohlenstoffatomen.

Der Begriff "Aryl" steht vorzugsweise Phenyl, mithin auch für Naphthyl.

Im Rahmen der vorliegenden Beschreibung sind Mengenangaben im allgemeinen auf das Gesamtgewicht eines Mittels zu beziehen, sofern nicht anderes angeben ist. Der Ausdruck "im Wesentlichen" bezeichnet erfindungsgemäß in der Regel ein prozentuales Verhältnis von wenigstens 90 %, vorzugsweise von wenigstens 95 % und insbesondere von wenigstens 98 %.

Die Erfindung wird durch die nachfolgenden Beispiele näher erläutert:

### Herstellungsbeispiele

### Referenzbeispiele 1 bis 4:

### Herstellung der Copolymere a bis d

Die Copolymere a bis d setzen sich zusammen aus den Bausteinen der Formeln (VIIIp), (VIIIq1) und (VIIIq2): 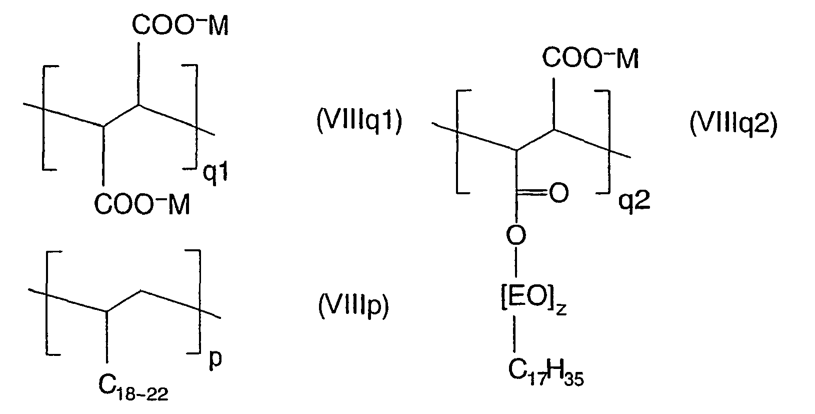 wobei M für Wasserstoff oder Na⁺ steht und die Variablen p, q1, q2 und z folgende Bedeutungen besitzen:

**Tabelle 1: Aufbau erfindungsgemäßer Copolymere a-d (die Werte p, q1 und q2 geben die relativen Anteile in mol-% an)**

| CP | p | q1 | q2 | z |
|---|---|---|---|---|
| a | 0,5 | 0,25 | 0,25 | 11 |
| b | 0,5 | 0,25 | 0,25 | 25 |
| c | 0,5 | 0,25 | 0,25 | 80 |
| d | 0,5 | 0,5 | 0 | 0 |

In einem für Polymerisationen ausgerüsteten Reaktor aus Stahl, der mit einem Rührer und Dosierungsvorrichtungen versehen ist, werden 1195 g eines C₂₀-C₂₄-Olefin-1-Gemisches vorgelegt und unter Rühren in einem schwachen Stickstoffstrom auf 190 °C erhitzt. Sobald diese Temperatur erreicht ist, fügt man gleichmäßig 392 g auf 70 °C erhitztes Maleinsäureanhydrid und separat davon 16 g Ditertiärbutylperoxid innerhalb von 4 Stunden zu. Anschließend wird das Reaktionsgemisch 2 Stunden bei 190 °C gerührt und dann entweder hydrolysiert oder solvolysiert.

Zur Solvolyse (Copolymere a, b und c lässt man in das Reaktionsgemisch unter Rühren bei 150 °C einen Alkylpolyglykolether aus einem C₁₇-Oxoalkohol (C_{16/18}-oxoalkohol-Gemisch) mit einem Ethylenoxidblock von 11 (1450 g, zur Synthese von Copolymer a), 25 (2665 g, zur Synthese von Copolymer b), und 80 (6878 g, zur Synthese von Copolymer c) zulaufen und rührt 5 Stunden. Danach wird das Reaktionsgemisch unter Rühren auf 90 °C abgekühlt. Innerhalb einer halben Stunde gibt man dann jeweils getrennt voneinander 160 g einer 50%igen wässrigen Natronlauge und soviel auf 90 °C erwärmtes Wasser zu, dass sich eine Lösung mit einem Feststoffgehalt von 30% ergibt. Das Reaktionsgemisch wird 4 Stunden in dem Temperaturbereich von 90 bis 95 °C gerührt und danach auf Umgebungstemperatur abgekühlt. Man erhält auf diese Weise eine schwachviskose wässrige Dispersion eines Copolymers, bei dem 50 mol-% der insgesamt entstehenden Carboxylgruppen neutralisiert sind.

Zur Hydrolyse (Polymer d) wird das Reaktionsgemisch unter Rühren auf 90 °C abgekühlt. Innerhalb einer halben Stunde gibt man dann jeweils getrennt voneinander 320 g einer 50 %igen wässrigen Natronlauge und 3909 g auf 90 °C erwärmtes Wasser zu. Das Reaktionsgemisch wird 4 Stunden in dem Temperaturbereich von 90 bis 95 °C gerührt und danach auf Umgebungstemperatur abgekühlt. Man erhält auf diese Weise eine schwachviskose wässige Dispersion eines Copolymers mit einem Feststoffgehalt von 30% und bei dem 50 mol-% der insgesamt entstehenden Carboxylgruppen neutralisiert sind.

### Beispiel 1: Herbizide Wirksamkeit der Bentazon-Formulierungen

Die Applikation der aus Tabelle 1 ersichtlichen Copolymere erfolgte im Tankmixverfahren zusammen mit Basagran (480 g/l Bentazon). Die Aufwandmenge pro ha betrug 0,125 kg Bentazon und 2, 1,0 bzw. 0,5 kg a.S./ha Copolymer bzw. Vergleichstensid Wettol LF 700 (Alkoholalkoxylat). Die herbizide Wirkung wurde im Gewächshausversuch beurteilt. Als Testpflanzen dienten Sojabohnen (Glycine max; GLXMA), Chinesischer Hanf (Abutilon theophrasti; ABUTH), Weißer Gänsefuß (Chenopodium album; CHEAL) und Flohknöterich (Polygonum persicaria; POLPE). Diese wurden entweder nach Arten getrennt eingesät oder zunächst als Keimpflanze getrennt angezogen und einige Tage vor der Behandlung in die Versuchsgefäße verpflanzt. Als Versuchsgefäße dienten Plastiktöpfe mit lehmigem Sand und etwa 3,0 % Humus als Substrat. Die Behandlung mit den Formulierungen erfolgte, sobald die Pflanzen je nach Wuchsform eine Wuchshöhe von 3-20 cm erreicht hatten. Die Aufwandmenge für die Nachauflaufbehandlung betrug 0,125 kg, a.S./ha Bentazon und 2,0 bzw. 1,0 bzw. 0,5 kg a.S./ha Copolymer bzw. Vergleichstensid.

Die Versuchsperiode erstreckte sich über 2 bis 4 Wochen. Während dieser Zeit wurden die Pflanzenarten spezifisch bei Nacht-Temperaturen oberhalb von 14 °C und Tages-Temperaturen zwischen 20 und 31 °C gehalten, gepflegt, und ihre Reaktion auf die einzelnen Behandlungen wurde ausgewertet.

Die Bewertung erfolgte nach einer Skala von 0 bis 100. Dabei bedeutet 100 kein Aufgang der Pflanzen bzw. völlige Zerstörung zumindest der oberirdischen Teile und 0 keine Schädigung oder normaler Wachstumsverlauf.

In der folgenden Tabelle 2 sind die Bewertungsergebnisse zusammengestellt.

| Adjuvant | Bentazon (kg/ha) | Adjuvant (kg/ha) | GLXMA | ABUTH | CHEAL | POLPE |
|---|---|---|---|---|---|---|
| **-** | **0,125** | **-** | **0** | **64** | **9** | **86** |
| a | 0,125 | 2 | 1 | 65 | 69 | 89 |
| a | 0,125 | 1 | 0 | 73 | 66 | 85 |
| a | 0,125 | 0,5 | 0 | 51 | 55 | 91 |
| **a** | **0,125** | **Average** | **0** | **63** | **63** | **88** |
| b | 0,125 | 2 | 0 | 70 | 61 | 99 |
| b | 0,125 | 1 | 0 | 81 | 48 | 100 |
| b | 0,125 | 0,5 | 0 | 74 | 21 | 86 |
| **b** | **0,125** | **Average** | **0** | **75** | **43** | **95** |
| c | 0,125 | 2 | 0 | 70 | 59 | 100 |
| 0,125 | | 1 | 0 | 68 | 63 | 100 |
| c | 0,125 | 0,5 | 0 | 59 | 60 | 96 |
| **c** | **0,125** | **Average** | **0** | **66** | **61** | **99** |
| d | 0,125 | 2 | 0 | 89 | 34 | 86 |
| d | 0,125 | 1 | 0 | 64 | 30 | 88 |
| d | 0,125 | 0,5 | 0 | 71 | 28 | 86 |
| **d** | **0,125** | **Average** | **2** | **75** | **31** | **87** |
| Wettol LF700 | 0,125 | 2 | 35 | 91 | 49 | 83 |
| Wettol LF700 | 0,125 | 1 | 30 | 70 | 53 | 86 |
| Wettol LF700 | 0,125 | 0,5 | 19 | 65 | 49 | 70 |
| **Wettol LF700** | **0,125** | **Average** | **28** | **75** | **50** | **80** |

Es ist klar ersichtlich, dass Formulierungen mit erfindungsgemäßem Copolymer wesentlich wirksamer waren als die Vergleichsformulierung ohne Adjuvant, bzw. als die Vergleichsformulierungen, die lediglich Wettol LF700, ein Alkoholethoxylat, anstatt erfindungsgemäßer Copolymere enthielten. Es ist weiterhin klar ersichtlich, dass Formulierungen mit erfindungsgemäßem Copolymer dem Wirkstoff eine größere Selektivität verleihen, was durch weniger Pflanzenschäden für Soja zum Ausdruck kommt.

## Patentansprüche

1. Agrotechnisches Mittel, umfassend wenigstens ein Copolymer oder ein Salz des Copolymers, das Monomereinheiten
(i) wenigstens eines Olefins,
(ii) wenigstens einer ethylenisch ungesättigten Dicarbonsäure und wenigstens eines ethylenisch ungesättigten Dicarbonsäurederivats, und gegebenenfalls
(iii)wenigstens eines weiteren copolymerisierbaren Comonomers enthält,
wobei das Dicarbonsäurederivat ein Dicarbonsäuremonoester oder Dicarbonsäurediester ist mit einem Alkoholteil der Formel (I)
(R¹)ₙ-X-(CHR²CH₂O)_{w}-(CHR³CH₂O)ₓ-(CHR⁴(CH₂)_{y}O)_{z}- (I),
worin
R¹ für Wasserstoff, verzweigtes oder lineares, gesät- tigtes oder ungesättigtes C₁₋₄₀-Alkyl steht;
R², R³, R⁴ unabhängig voneinander für Wasserstoff oder C₁₋₄-Al- kyl stehen;
w, x, z unabhängig voneinander einem wert von 0 bis 100 entsprechen;
y einem Wert von 1 bis 20 entspricht;
X für N oder O steht, wobei n = 1 ist, wenn X = O ist, oder n = 2 ist und die Summe aus w, x, z wenigstens 1 beträgt, wenn X = N ist.

2. Mittel nach Anspruch 1, **dadurch gekennzeichnet, dass** das Dicarbonsäurederivat ein Dicarbonsäuremonoester ist mit einem Alkoholteil der Formel (I)
(R¹)ₙ-X-(CHR²CH₂O)_{w}-(CHR³CH₂O)ₓ-(CHR⁴(CH₂)_{y}O)_{z}- (I),
worin
R¹ für Wasserstoff, verzweigtes oder lineares, gesät- tigtes oder ungesättigtes C₁₋₄₀-Alkyl steht;
R², R³, R⁴ unabhängig voneinander für Wasserstoff oder C₁₋₄-Al- kyl stehen;
w, x, z unabhängig voneinander einem Wert von 0 bis 100 entsprechen;
y einem Wert von 1 bis 20 entspricht;
X für N oder O steht, wobei n = 1 ist, wenn X = O ist, oder n = 2 ist und die Summe aus w, x, z wenigstens 1 beträgt, wenn X = N ist.

3. Mittel nach Anspruch 1 oder 2, **dadurch gekennzeichnet, dass** der Alkoholteil alkoxyliert ist.

4. Mittel nach einem der Ansprüche 1 bis 3, **dadurch gekennzeichnet, dass** das Verhältnis von ethylenisch ungesättigten Dicarbonsäuren zu Dicarbonsäurederivaten 5:95 bis 95:5 beträgt.

5. Mittel nach einem der Ansprüche 1 bis 3, **dadurch gekennzeichnet, dass** das Verhältnis 40:60 bis 60:40 beträgt.

6. Mittel nach einem der Ansprüche 1 bis 5, **dadurch gekennzeichnet, daß** die Dicarbonsäure Maleinsäure und der Dicarbonsäuremonoester oder Dicarbonsäurediester ein Maleinsäuremonoester bzw. ein Maleinsäurediester sind.

7. Mittel nach einem der Ansprüche 1 bis 6, **dadurch gekennzeichnet, dass** das Copolymer Monomereinheiten (ii) der Formel (VIIq1) und der Formel (VIIq2) 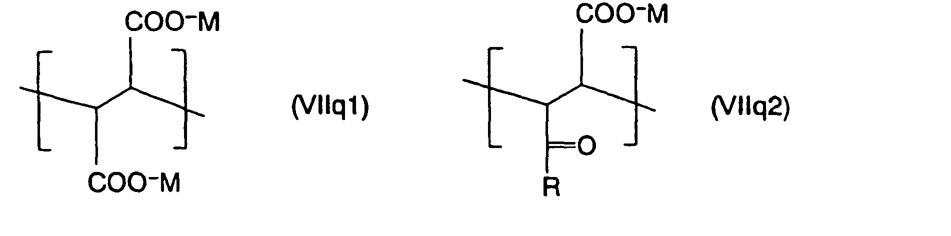 umfasst, worin
M jeweils unabhängig für Wasserstoff oder ein Kation steht, wobei das Kation ausgewählt ist unter Alkali-, Erdalkali- und Übergangsmetallkationen, insbesondere Na⁺, K⁺, Mg⁺⁺, Ca⁺⁺ und Zn⁺⁺, NH₄⁺, sowie quaternären Ammoniumkationen, insbesondere Alkylaaunonium, Dialkylammonium, Trialkylam- monium und Tetraalkylammonium; und
R für einen Rest der Formel (I) steht.

8. Mittel nach Anspruch 7, **dadurch gekennzeichnet, dass** der Rest R in Formel (VIIq2) für einen Alkoholrest der Formel (Ia)
R¹-O-(C₂H₄O)_{z}- (Ia)
steht, worin
R¹ für Wasserstoff, oder verzweigtes oder lineares, gesät- tigtes oder ungesättigtes C₁₋₄₀-Alkyl steht; und
z einem wert von 1 bis 100 entspricht.

9. Mittel nach einem der Ansprüche 1 bis 8, **dadurch gekennzeichnet, dass** das Copolymer Monomereinheiten (i) der Formel (VIIp) 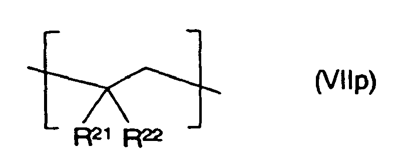 umfasst, worin
R²¹, R²² unabhängig voneinander für Wasserstoff, verzweigtes oder lineares, gesättigtes-oder ungesättigtes C₂₋₃₈-Alkyl oder gegebenenfalls C₁₋₄-Alkyl-substi- tuiertes Phenyl stehen.

10. Mittel nach Anspruch 9, **dadurch gekennzeichnet, daß** R²¹ Wasserstoff ist und R²² für C₆₋₂₂-Alkyl steht.

11. Mittel nach einem der Ansprüche 1 bis 8, **dadurch gekennzeichnet, daß** das Olefin ausgewählt ist unter Isobuten, Diisobuten, C₁₈-Olefin-Gemischen und C₂₀-C₂₄-Olefin-Gemischen.

12. Mittel nach einem der Ansprüche 1 bis 11, **dadurch gekennzeichnet, daß** das weitere copolymerisierbare Comonomer ausgewählt ist unter (Meth)acrylsäure, (Meth)acrylamid, (Meth)acrylnitril, Alkyl(meth)acrylaten, Carbonsäurevinylestern, Alkylvinylethern und N-Alkyl- oder N-Aryl-substituierten Maleinsäureimiden.

13. Mittel nach einem der Ansprüche 1 bis 12, **dadurch gekennzeichnet, daß** wenigstens 50 mol-% der insgesamt im Copolymer vorhandenen Carboxylgruppen in Salzform vorliegen.

14. Mittel nach einem der Ansprüche 1 bis 13, **dadurch gekennzeichnet, daß** das Copolymer oder Salz davon erhältlich ist durch Copolymerisation von
(1) 30 bis 70 mol-% wenigstens eines Olefins und/oder wenigstens eines Vinylethers,
(2) 70 bis 30 mol-% wenigstens eines ethylenisch ungesättigten Dicarbonsäureanhydrids, und
(3) 0 bis 40 mol-% wenigstens eines weiteren copolymerisierbaren Comonomers
sowie zumindest partieller Alkoholyse der Carbonsäureanhydridgruppen mit einem dem Alkoholrest des Copolymers entsprechenden Alkohol und anschließender zumindest partieller Hydrolyse verbleibender Carbonsäureanhydridgruppen.

15. Mittel nach einem der Ansprüche 1 bis 14, **dadurch gekennzeichnet, daß** das es wenigstens einen Wirkstoff zur Pflanzenbehandlung enthält, der ausgewählt ist unter Herbiziden, Fungiziden, Insektiziden, Akariziden, Nematiziden und Wirkstoffen, die das Pflanzenwachstum regulieren.

16. Verwendung eines Copolymers oder eines Salzes des Copolymers, enthaltend Monomereinheiten
(i) wenigstens eines Olefins und/oder wenigstens eines Vinylethers,
(ii) wenigstens einer ethylenisch ungesättigten Dicarbonsäure und/oder wenigstens eines ethylenisch ungesättigten Dicarbonsäurederivats, und gegebenenfalls
(iii)wenigstens eines weiteren copolymerisierbaren Comonomers,
als Adjuvans bei der Behandlung von Pflanzen.

17. Verwendung nach Anspruch 16, zur Verbesserung der Wirksamkeit eines Pflanzenschutzwirkstoffs.

18. Verwendung nach Anspruch 16 oder 17, wobei das Copolymer oder Salz davon wie in einem der Ansprüche 1 bis 15 definiert ist.

19. Verwendung nach einem der Ansprüche 16 bis 18, wobei der Pflanzenschutzwirkstoff ein Herbizid ist.

20. Verwendung nach Anspruch 19, im Nachauflaufverfahren.

21. Verwendung nach Anspruch 20, bei der Sprühbehandlung von Pflanzen.

## Claims

1. An agrotechnical composition comprising at least one copolymer or a salt of the copolymer comprising monomer units
(i) of at least one olefin,
(ii) at least one ethylenically unsaturated dicarboxylic acid and/or at least one ethylenically unsaturated dicarboxylic acid derivative, and, if appropriate,
(iii) at least one further copolymerizable comonomer,
where the dicarboxylic acid derivative is a dicarboxylic acid monoester or dicarboxylic acid diester with an alcohol moiety of the formula (I)
(R¹)ₙ-X- (CHR²CH₂O)_{w}- (CHR³CH₂O)ₓ-(CHR⁴(CH₂)_{y}O)_{z}- (I),
in which
R¹ is hydrogen, branched or linear, saturated or unsaturated C₁₋₄₀-alkyl;
R², R³, R⁴ independently of one another are hydrogen or C₁₋₄-alkyl;
w, x, z independently of one another correspond to a value of from 0 to 100;
y corresponds to a value of from 1 to 20;
X is N or 0, where n = 1 if X = O, or n = 2 and the total of w, x and z amounts to at least 1 if X = N.

2. The composition according to claim 1, wherein the dicarboxylic acid derivative is a dicarboxylic acid monoester with an alcohol moiety of the formula (I)
(R¹)ₙ-X-(CHR²CH₂O)_{w}-(CHR³CH₂O)ₓ-(CHR⁴(CH₂)_{y}O)_{z}- (I),
in which
R¹ is hydrogen, branched or linear, saturated or unsaturated C₁₋₄₀-alkyl;
R² R³, R⁴ independently of one another are hydrogen or C₁₋₄-alkyl;
w, x, z independently of one another correspond to a value of from 0 to 100;
y corresponds to a value of from 1 to 20;
X is N or 0, where n = 1 if X = 0, or n = 2 and the total of w, x and z amounts to at least 1 if X = N.

3. The composition according to claim 1 or 2, wherein the alcohol moiety is alkoxylated.

4. The composition according to any of claims 1 to 3, wherein the ratio of ethylenically unsaturated dicarboxylic acids to dicarboxylic acid derivatives is 5:95 to 95:5.

5. The composition according to any of claims 1 to 3, wherein the ratio is 40:60 to 60:40.

6. The composition according to any of claims 1 to 5, wherein the dicarboxylic acid is maleic acid and the dicarboxylic acid monoester or dicarboxylic acid diester is a maleic acid monoester or a maleic acid diester.

7. The composition according to any of claims 1 to 6, wherein the copolymer comprises monomer units (ii) of the formula (VIIq1) and the formula (VIIq2) 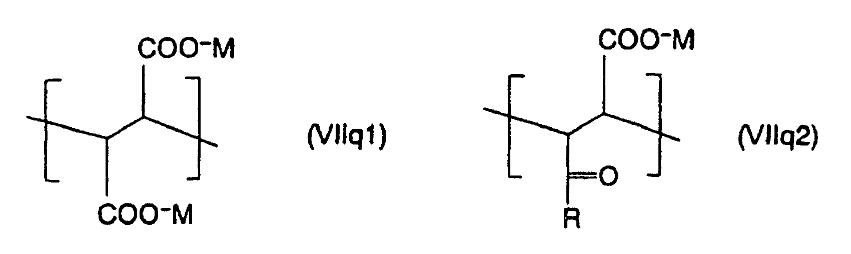 in which
M radicals are in each case independently of one another a hydrogen atom or a cation selected from among alkali metal, alkaline earth metal and transition metal cations, in particular Na⁺, K⁺, Mg⁺⁺, Ca⁺⁺ and Zn⁺⁺, NH₄⁺ and quaternary ammonium cations, in particular alkylammonium, dialkylammonium, trialkylammonium and tetraalkylammonium; and
R is a residue of the formula (I).

8. The composition according to claim 7, wherein the residue R in formula (VIIq2) is an alcohol residue of the formula (Ia)
R¹-O-(C₂H₄O)_{z}- (Ia)
in which
R¹ is hydrogen, or branched or linear, saturated or unsaturated C₁₋₄₀-alkyl; and
z corresponds to a value of from 1 to 100.

9. The composition according to any of claims 1 to 8, wherein the copolymer comprises monomer units (i) of the formula (VIIp) 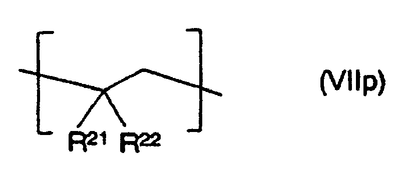 in which
R²¹, R²² independently of one another are hydrogen, branched or linear, saturated or unsaturated C₂₋₃₈-alkyl, or unsubstituted or C₁₋₄-alkyl-substituted phenyl.

10. The composition according to claim 9, wherein R²¹ is hydrogen and R²² is C₆₋₂₂-alkyl.

11. The composition according to any of claims 1 to 8, wherein the olefin is selected from among isobutene, diisobutene, C₁₈-olefin mixtures and C₂₀-C₂₄-olefin mixtures.

12. The composition according to any of claims 1 to 11, wherein the further copolymerizable comonomer is selected from among (meth)acrylic acid, (meth)acrylamide, (meth)acrylonitrile, alkyl (meth)acrylates, carboxylic acid vinyl esters, alkyl vinyl ethers and N-alkyl- or N-aryl-substituted maleimides.

13. The composition according to any of claims 1 to 12, wherein at least 50 mol% of the carboxyl groups which are present in total in the copolymer are in salt form.

14. The composition according to any of claims 1 to 13, wherein the copolymer or salt thereof can be obtained by copolymerizing
(1) 30 to 70 mol% of at least one olefin and/or at least one vinyl ether,
(2) 70 to 30 mol% of at least one ethylenically unsaturated dicarboxylic anhydride, and
(3) 0 to 40 mol% of at least one further copolymerizable comonomer,
and at least partial alcoholysis of the carboxylic anhydride groups with an alcohol which coresponds to the alcohol residue of the copolymer, followed by at least partial hydrolysis of remaining carboxylic anhydride groups.

15. The composition according to any of claims 1 to 14, which comprises at least one active ingredient for the treatment of plants which is selected from among herbicides, fungicides, insecticides, acaricides, nematicides and active ingredients which regulate the growth of plants.

16. The use of a copolymer or of a salt of the copolymer comprising monomer units
(i) of at least one olefin and/or at least one vinyl ether,
(ii) at least one ethylenically unsaturated dicarboxylic acid and/or at least one ethylenically unsaturated dicarboxylic acid derivative, and, if appropriate,
(iii) at least one further copolymerizable comonomer
as an adjuvant in the treatment of plants.

17. The use according to claim 16 for improving the efficacy of a crop protectant.

18. The use according to claim 16 or 17, where the copolymer or salt thereof is as defined in any of claims 1 to 15.

19. The use according to any of claims 16 to 18, where the crop protectant is a herbicide.

20. The use according to claim 19 post-emergence.

21. The use according to claim 20 in the spray treatment of plants.

## Revendications

1. Agent agrotechnique, comprenant au moins un copolymère ou un sel du copolymère, qui contient des motifs monomères
(i) d'au moins une oléfine,
(ii) d'au moins un acide dicarboxylique à insaturation éthylénique et d'au moins un dérivé d'acide dicarboxylique à insaturation éthylénique, et éventuellement
(iii) d'au moins un autre comonomère copolymérisable,
le dérivé d'acide dicarboxylique étant un monoester d'acide dicarboxylique ou un diester d'acide dicarboxylique comportant un fragment alcool de formule (I)
(R¹)ₙ-X-(CHR²CH₂O)_{w}-(CHR³CH₂O)ₓ-(CHR⁴(CH₂)_{y}O)_{z}- (I),
dans laquelle
R¹ représente un atome d'hydrogène, un groupe alkyle en C₁-C₄₀ saturé ou insaturé, ramifié ou non ramifié ;
R², R³, R⁴ représentent, chacun indépendamment, un atome d'hydrogène ou un groupe alkyle en C₁-C₄ ;
w, x, z ont, chacun indépendamment, une valeur de 0 à 100 ;
y correspond à une valeur de 1 à 20 ;
x représente N ou O,
n étant égal à 1 lorsque X = O, ou n étant égal à 2 et la somme de w, x, z étant égale au moins à 1 lorsque X = N.

2. Agent selon la revendication 1, **caractérisé en ce que** le dérivé d'acide dicarboxylique est un monoester d'acide dicarboxylique comportant un fragment alcool de formule (I)
(R¹)ₙ-X-(CHR² CH₂O)_{w}-(CHR³ CH₂O)ₓ-(CHR⁴(CH₂)_{y}O)_{z}- (I),
dans laquelle
R¹ représente un atome d'hydrogène, un groupe alkyle en C₁-C₄₀ saturé ou insaturé, ramifié ou non ramifié ;
R², R³, R⁴ représentent, chacun indépendamment, un atome d'hydrogène ou un groupe alkyle en C₁-C₄ ;
w, x, z ont, chacun indépendamment, une valeur de 0 à 100 ;
y correspond à une valeur de 1 à 20 ;
x représente N ou O,
n étant égal à 1 lorsque X = 0, ou n étant égal à 2 et la somme de w, x, z étant égale au moins à 1 lorsque X = N.

3. Agent selon la revendication 1 ou 2, **caractérisé en ce que** le fragment alcool est alcoxylé.

4. Agent selon l'une quelconque des revendications 1 à 3, **caractérisé en ce que** le rapport des acides dicarboxyliques à insaturation éthyléniques aux dérivés d'acides dicarboxyliques va de 5:95 à 95:5.

5. Agent selon l'une quelconque des revendications 1 à 3, **caractérisé en ce que** le rapport va de 40:60 à 60:40.

6. Agent selon l'une quelconque des revendications 1 à 5, **caractérisé en ce que** l'acide dicarboxylique est l'acide maléique et le monoester d'acide dicarboxylique ou le diester d'acide dicarboxylique est un monoester d'acide maléique ou un diester d'acide maléique.

7. Agent selon l'une quelconque des revendications 1 à 6, **caractérisé en ce que** le copolymère comprend des motifs monomères (ii) de formule (VIIq1) et de formule (VIIq2) 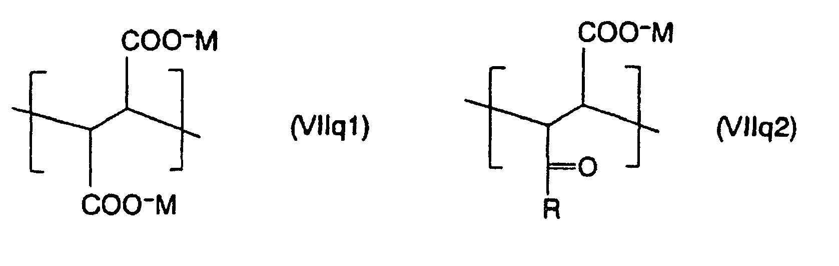 où
M représente chaque fois indépendamment un atome d'hydrogène ou un cation, le cation étant choisi parmi les cations de métaux alcalins, alcalino-terreux ou de transition, en particulier Na⁺, K⁺, Mg⁺⁺, Ca⁺⁺ et Zn⁺⁺, NH₄⁺, ainsi que des cations ammonium quaternaire, en particulier alkylammonium, dialkylammonium, trialkylammonium et tétraalkylammonium ; et
R représente un radical de formule (I).

8. Agent selon la revendication 7, **caractérisé en ce que** le radical R dans la formule (VIIq2) représente un reste d'alcool de formule (Ia)
R¹-O-(C₂H₄O)_{z}- (Ia)
dans laquelle
R¹ représente un atome d'hydrogène ou un groupe alkyle en C₁-C₄₀ saturé ou insaturé, linéaire ou ramifié ; et
z correspond à une valeur de 1 à 100.

9. Agent selon l'une quelconque des revendications 1 à 8, **caractérisé en ce que** le copolymère comprend des motifs monomères (i) de formule (VIIp) 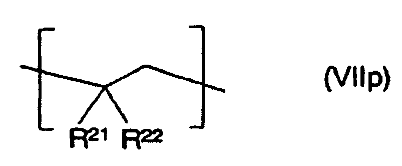 dans laquelle
R²¹, R²² représentent, indépendamment l'un de l'autre, un atome d'hydrogène, un groupe alkyle en C₂-C₃₈ saturé ou insaturé, linéaire ou ramifié, ou un groupe phényle éventuellement substitué par alkyle en C₁-C₄.

10. Agent selon la revendication 9, **caractérisé en ce que** R²¹ est un atome d'hydrogène et R²² représente un groupe alkyle en C₆-C₂₂.

11. Agent selon l'une quelconque des revendications 1 à 8, **caractérisé en ce que** l'oléfine est choisie parmi l'isobutène, le diisobutène, des mélanges d'oléfines en C₁₈ et des mélanges d'oléfines en C₂₀-C₂₄.

12. Agent selon l'une quelconque des revendications 1 à 11, **caractérisé en ce que** l'autre comonomère copolymérisable est choisi parmi l'acide (méth)acrylique, le (méth)acrylamide, le (méth)acrylonitrile, des (méth)acrylate d'alkyle, des esters vinyliques d'acides carboxyliques, des éthers alkylvinyliques et des maléimides N-substitués par alkyle ou aryle.

13. Agent selon l'une quelconque des revendications 1 à 12, **caractérisé en ce qu'**au moins 50 % en moles des groupes carboxy présents au total dans le copolymère se trouvent sous forme de sel.

14. Agent selon l'une quelconque des revendications 1 à 13, **caractérisé en ce que** le copolymère ou sel de celui-ci peut être obtenu par copolymérisation de
(1) 30 à 70 % en moles d'au moins une oléfine et/ou d'au moins un éther vinylique,
(2) 70 à 30 % en moles d'au moins un anhydride d'acide dicarboxylique à insaturation éthylénique, et
(3) 0 à 40 % en moles d'au moins un autre comonomère copolymérisable
ainsi qu'alcoolyse au moins partielle des groupes anhydride d'acide carboxylique par un alcool correspondant au reste alcool du copolymère et hydrolyse au moins partielle subséquente des groupes anhydride d'acide carboxylique restants.

15. Agent selon l'une quelconque des revendications 1 à 14, **caractérisé en ce qu'**il contient au moins une substance active pour le traitement de plantes, qui est choisie parmi les herbicides, les fongicides, les insecticides, les acaricides, les nématicides et des substances actives qui régulent la croissance végétale.

16. Utilisation d'un copolymère ou d'un sel du copolymère, contenant des motifs monomères
(i) d'au moins une oléfine et/ou d'au moins un éther vinylique,
(ii) d'au moins un acide dicarboxylique à insaturation éthylénique et/ou d'au moins un dérivé d'acide dicarboxylique à insaturation éthylénique, et éventuellement
(iii) d'au moins un autre comonomère copolymérisable,
comme adjuvant dans le traitement de plantes.

17. Utilisation selon la revendication 16, pour l'amélioration de l'efficacité d'une substance active phytoprotectrice.

18. Utilisation selon la revendication 16 ou 17, le copolymère ou sel de celui-ci étant tel que défini dans l'une quelconque des revendications 1 à 15.

19. Utilisation selon l'une quelconque des revendications 16 à 18, dans laquelle la substance phytoprotectrice est un herbicide.

20. Utilisation selon la revendication 19, dans le procédé de traitement post-levée.

21. Utilisation selon la revendication 20, dans le traitement de plantes par pulvérisation.
